# EUROPEAN PATENT APPLICATION

(11) **EP 4 814 810 A1**
(43) Date of publication of application: **30.09.2026**
(21) Application number: 26168293.4
(22) Date of filing: 26.03.2026
(51) Int. Cl.: G06N 10/70, G06N 10/20

(54) **IMPROVED CHARACTERISATION OF NOISE PROCESSES IN QUANTUM COMPUTATIONAL SIMULATIONS OF FERMIONIC SYSTEMS**

(30) Priority: 28.03.2025 US 202563779563 P
(71) Applicant: Phasecraft Limited, London Greater London W1T 4PW (GB)
(72) Inventor: CHAPMAN, Adrian, London, W1T 4PW (GB); FLAMMIA, Steven, London, W1T 4PW (GB)
(74) Representative: Mathys & Squire

(57) **Abstract**

Quantum information is extremely fragile, so performing reliable quantum computation requires a complete understanding of the noise affecting our quantum computer. We show that we can achieve such a characterization when our quantum computer is simulating a natural system from the physical world. The methods and apparatuses described herein include rearranging basic control operations of quantum circuits to form new circuits and enlarging the new circuits by inserting additional operations between he basic control operations. By measuring the outputs of the new circuits based on known input states, statistical information on noise processes in the basic control operations may be extracted.

## Description

The present invention relates to characterising noise processes in quantum computations and in particular to characterising noise processes of individual quantum gates of quantum circuits.

Various documents have been published in this field, which are referred to in the following as:
[1] F. Arute, K. Arya, R. Babbush, D. Bacon, J. C. Bardin, R. Barends, R. Biswas, S. Boixo, F. G. S. L. Brandao, D. A. Buell, B. Burkett, Y. Chen, Z. Chen, B. Chiaro, R. Collins, et al., Quantum supremacy using a programmable superconducting processor, Nature 574, 505-510 (2019).
[2] G. Burkard, T. D. Ladd, A. Pan, J. M. Nichol, and J. R. Petta, Semiconductor spin qubits, Rev. Mod. Phys. 95, 025003 (2023).
[3] S. McArdle, S. Endo, A. Aspuru-Guzik, S. C. Benjamin, and X. Yuan, Quantum computational chemistry, Rev. Mod. Phys. 92, 015003 (2020).
[4] E. Knill, Quantum computing with realistically noisy devices, Nature 434, 39-44 (2005).
[5] J. J. Wallman and J. Emerson, Noise tailoring for scalable quantum computation via randomized compiling, Phys. Rev. A 94, 052325 (2016).
[6] R. Blume-Kohout, J. King Gamble, E. Nielsen, J. Mizrahi, J. D. Sterk, and P. Maunz, Robust, selfconsistent, closed-form tomography of quantum logic gates on a trapped ion qubit, arXiv:1310.4492 [quant-ph] (2013).
[7] D. Kim, D. R. Ward, C. B. Simmons, J. K. Gamble, R. Blume-Kohout, E. Nielsen, D. E. Savage, M. G. Lagally, M. Friesen, S. N. Coppersmith, and M. A. Eriksson, Microwave-driven coherent operation of a semiconductor quantum dot charge qubit, Nature Nanotechnology 10, 243-247 (2015).
[8] E. Nielsen, J. K. Gamble, K. Rudinger, T. Scholten, K. Young, and R. Blume-Kohout, Gate Set Tomography, Quantum 5, 557 (2021).
[9] S. T. Flammia, Averaged Circuit Eigenvalue Sampling, in 17th Conference on the Theory of Quantum Computation, Communication and Cryptography (TQC 2022), Leibniz International Proceedings in Informatics (LIPIcs), Vol. 232, edited by F. Le Gall and T. Morimae (Schloss Dagstuhl - Leibniz-Zentrum für Informatik, Dagstuhl, Germany, 2022) pp. 4:1-4:10.
[10] R. Jozsa and A. Miyake, Matchgates and classical simulation of quantum circuits, Proc. R. Soc. A. 464, 3089-3106 (2008).
[11] S. Chen, Y. Liu, M. Otten, A. Seif, B. Fefferman, and L. Jiang, The learnability of Pauli noise, Nat Commun 14, 52 (2023).
[12] S. Chen, Z. Zhang, L. Jiang, and S.T. Flammia, Efficient Self-Consistent Learning of Gate Set Pauli Noise, PRX Quantum 7, 010305 (2026).
[13] E. T. Hockings, A. C. Doherty, and R. Harper, Scalable Noise Characterization of Syndrome-Extraction Circuits with Averaged Circuit Eigenvalue Sampling, PRX Quantum 6, 010334 (2025).
[14] J. Claes, E. Rieffel, and Z. Wang, Character randomized benchmarking for non-multiplicity-free groups with applications to subspace, leakage, and matchgate randomized benchmarking, PRX Quantum 2, 010351 (2021).
[15] G. Liu, Z. Xie, Z. Xu, and X. Ma, Group twirling and noise tailoring for multiqubit controlled phase gates, Phys. Rev. Res. 6, 043221 (2024*).*
[16] J. Wilkens, M. loannou, E. Derbyshire, J. Eisert, D. Hangleiter, I. Roth, and J. Haferkamp, Benchmarking bosonic and fermionic dynamics, arXiv:2408.11105 [quant-ph] (2024).
[17] J. Cudby and S. Strelchuk, Learning Gaussian Operations and the Matchgate Hierarchy, arXiv e-prints, arXiv:2407.12649 (2024), arXiv:2407.12649 [quant-ph].
[18] J. Helsen, S. Nezami, M. Reagor, and M. Walter, Matchgate benchmarking: Scalable benchmarking of a continuous family of many-qubit gates, Quantum 6, 657 (2022).
[19] J. Burkat and S. Strelchuk, A Lightweight Protocol for Matchgate Fidelity Estimation, arXiv:2404.07974 [quant-ph] (2024).
[20] C. Dankert, Efficient Simulation of Random Quantum States and Operators, arXiv:quant-ph/0512217 [quant-ph] (2005).
[21] Z. Jiang, K. J. Sung, K. Kechedzhi, V. N. Smelyanskiy, and S. Boixo, Quantum algorithms to simulate many-body physics of correlated fermions, Phys. Rev. Appl. 9, 044036 (2018).
[22] D. S. Franga and A. K. Hashagen, Approximate randomized benchmarking for finite groups, J. Phys. A: Math. Theor. 51, 395302 (2018).
[23] S. T. Flammia and J. J. Wallman, Efficient estimation of Pauli channels, ACM Transactions on Quantum Computing 1, 10.1145/3408039 (2020).
[24] S. T. Merkel, J. M. Gambetta, J. A. Smolin, S. Poletto, A. D. Córcoles, B. R. Johnson, C. A. Ryan, and M. Steffen, Self-consistent quantum process tomography, Phys. Rev. A 87, 062119 (2013).
[25] T. Schuster, J. Haferkamp, and H.-Y. Huang, Random unitaries in extremely low depth, arXiv:2407.07754 [quant-ph] (2024).
[26] N. LaRacuente and F. Leditzky, Approximate Unitary k-Designs from Shallow, Low-Communication Circuits, Commun. Math. Phys. 407, 51 (2026).
[27] K. Wan, W. J. Huggins, J. Lee, and R. Babbush, Matchgate shadows for fermionic quantum simulation, Commun. Math. Phys. 404, 629-700 (2023).
[28] V. Heyraud, H. Chomet, and J. Tilly, Unified Framework for Matchgate Classical Shadows,arXiv:2409.03836 [quant-ph] (2024).
[29] E. Magesan, J. M. Gambetta, B. R. Johnson, C. A. Ryan, J. M. Chow, S. T. Merkel, M. P. da Silva, G. A. Keefe, M. B. Rothwell, T. A. Ohki, M. B. Ketchen, and M. Steffen, Efficient measurement of quantum gate error by interleaved randomized benchmarking, Phys. Rev. Lett. 109, 080505 (2012).
[30] A. Montanaro and S. Stanisic, Error mitigation by training with fermionic linear optics, arXiv:2102.02120 [quant-ph] (2021).
[31] M. Papič, M. G. Algaba, E. Godinez-Ramirez, I. de Vega, A. Auer, F. Simkovic IV, and A. Calzona, Near-Term Fermionic Simulation with Subspace Noise Tailored Quantum Error Mitigation, arXiv:2503.11785 (2025), arXiv:2503.11785 [quant-ph].
[32] Jahan Claes (2020). code: jahanclaes/Hoffman-Decomposition-and-the-Matchgate-Group.git.

As fundamental building blocks of the universe, fermions are naturally the mediators of quantum information in many quantum computing architectures, such as superconducting [1] and semiconductor devices [2]. Many of the systems may be simulated with a quantum computer are systems of interacting fermions. These include quantum materials and quantum chemical systems, where the relevant degrees of freedom are interacting electrons [3]. It is thus natural to consider models of quantum computation that regard fermions as central objects. In principle, this removes any overhead from switching between fermion- and spin-based encodings, but it also presents unique challenges for other quantum information processing tasks due to the nonlocal nature of fermionic antisymmetric exchange statistics.

Predominant among these tasks is the characterization of quantum noise. Whereas noise is usually assumed to act independently on local degrees of freedom, subsequent gates will cause the effect of any such noise process to spread. In particular, fermionic models of quantum computing generally involve families of continuously parameterized gates. In this setting, even local noise will become complex-and thus difficult to learn-on the circuit timescales necessary to realise quantum computational advantage. To address the above issues, the strategy of noise tailoring is used, whereby noise is first physically driven to a desired form via averaging, or twirling, and the averaged noise parameters can be more easily learned [4, 5].

Noise tailoring is well-suited to the setting of gate-dependent noise, where it may be assumed that each distinct physical operation on the experiment introduces a unique, reproducible noise channel. The general problem of estimating all noise in a gate set having gate-dependent noise without any averaging is quite challenging [6-8], so it is natural to ask what role noise tailoring can play to simplify the problem. Ref. [9] introduced averaged circuit eigenvalue sampling (ACES) for quantum computations consisting of Clifford operations applied to stabilizer states with Pauli (as opposed to free-fermion) averaging. This was used for simultaneously characterizing the gate-dependent noise of many noisy Clifford gates with Pauli twirling. Clifford circuits with Pauli noise preserve the set of Pauli observables up to an overall factor-called the circuit eigenvalue-which quantifies the noise in the circuit. The main idea behind ACES is that the eigenvalues of many different noisy circuits are all dependent on a common set of gate-level noise eigenvalues, which can be extracted with access to enough experimental data.

The characterization of noisy fermionic linear optical gates has previously been explored [14-17]. Related works include Refs. [18] and [19]. In [18], the authors propose a method for estimating the average fidelity of noisy matchgate circuits. More specifically, Ref. [18] describes a generalization of randomized benchmarking to characterize the average noise over an ensemble of free-fermionic circuits. The present disclosure therefore improves upon this concept, by characterizing averaged noise (averaged over enlarged circuits), for each gate independently, instead of entire circuits. It is a generalization of randomized benchmarking in that regard and significantly enhances the quality of noise characterisation retrievable from a quantum computation.

In [19], the authors introduce a corresponding protocol that does not require an average over the matchgate group. That is, Ref. [19] describes a quasiprobability method for estimating the fidelity of a noisy free-fermionic transformation, and does not involve any circuit averaging, nor does it estimate the noise parameters for individual gates.

The present disclosure aims to address some or all of the foregoing shortcomings of the field.

The present disclosure addresses at least the technical problem in which ACES cannot be applied to quantum computations encoding dynamics of fermions, nor can it accommodate the case where such computations involve a set of continuous parameters. For instance, it is well-understood that Clifford circuits with stabilizer measurements are not universal for quantum computation, and any attempt to extend the ACES protocol to a universal circuit family will thus require a generalization to circuits and noise models that do not preserve unnormalized Pauli operators, providing a non-trivial development involving a variety of technical contributions highlighted in detail below.

The disclosure develops the field by generalising the concept of the noise characterisation, which has the technical advantage of being fit to characterise the noise of individual gates. The present disclosure also addresses the problem of facilitating the characterisation of noise for fermionic systems, allowing for the noise characterisation of circuits described by continuous dynamics.

The method disclosed herein, called fermionic averaged circuit eigenvalue sampling (FACES), gives much more detailed information about this noise and allows for complete flexibility in how the user chooses to parameterize the noise, overcoming the shortcomings of previous methods of noise characterisation in quantum computers. Furthermore, the present disclosure extends to a platform for noise characterisation implementable on various existing devices that exist today. It will be apparent that FACES can be applied to the problem of error mitigation, in addition to the ability to characterise noise. The specific application of this method to error mitigation is still somewhat open, but the idea is that any noise characterization technique allows us to build a model for the relationship between true and expected expectation values in circuits that lie outside of this family. Inverting this relationship can then give mitigated estimates for the true expectation values.

Furthermore, this invention discloses a protocol for the characterization of noisy fermionic linear optical (FLO) circuits, or equivalently, their qubit-embedded versions, noisy nearest-neighbour matchgate circuits. FLO circuits describe general time-dependent free-fermion dynamics, and matchgate circuits describe these same dynamics on qubits under a Jordan-Wigner transformation [10]. The protocol is described almost exclusively in the fermion picture here, but the results are interchangeable across the two paradigms.

Part of the innovation is an algorithm to simultaneously characterize the different gate-level noise processes affecting a quantum computer when the underlying quantum gates encode free-fermion dynamics. The assumption here is that the noise follows a specific model whose parameters (the gate eigenvalues) are subsequently estimated. The noise parameters could be used to develop a model that then would allow us to interpolate expectation values output by non-fermionic-linear-optical circuits, such as by probabilistic error cancellation (PEC). Given a collection of physical control operations on the quantum device (such as pulse sequences) with noise to be quantified, the algorithm prescribes a set of quantum circuits (i.e. state preparations, state transformations, and measurements) to perform and the data to record. From this data (i.e. the gates and the data to record, sometimes referred to as "output probabilities", while the "quantum circuits prescribed" together with the output probabilities define a linear system that is then solved to obtain the estimated parameters), the algorithm gives a prescription to learn the noise parameters, called gate eigenvalues, quantifying the performance of each given physical operation independently.

Previous methods have sought to address these issues by seeking to characterize averaged characteristics (such as by randomized benchmarking - a set of protocols to measure performance of quantum gates by estimating their error rates) or bulk properties of the noise (i.e. noise characterization at the circuit level as opposed to the gate level). This shortcoming fails to address the problem of refining noise characterisation to a gate-by-gate basis, such a characterisation providing an enhanced perspective informing better quantum circuit design. One way in which FACES goes beyond that known in the literature is by generalising randomized benchmarking to allow for the extraction of more detailed information such as gate eigenvalues. It also offers the further benefit of being naturally well-suited to platforms that encode quantum information in fermionic degrees of freedom.

The developments presented herein extend the former result to the in-situ case under similar physical requirements. Specifically, given the ability to randomly sample unitaries, the method and system disclosed can perform what is called "FLO twirling". One is also required to be able to reliably prepare the all-zeros state |0〉 and all-plus state |+〉^{⊗*n*}, and generate a set of noisy Fermionic Linear Optics (FLO) circuits that act as a particular target unitary on-net (either the identity, or a particular unitary *U*₊, to be defined). The term "on-net" is used to mean the net effect of the circuit when considered as a whole. For example, the application of two consecutive Pauli-X gates constitutes a small two-gate circuit and may be regarded as acting as the identity, on-net. One final requirement is to be able to measure in the computational basis and the Pauli-Y basis on at least one qubit. The effect of the noise on the twirling gates is also implicitly taken into account as part of the method. This point is returned to later in the document.

The characterization of noise processes affecting a quantum computer is a central obstacle on the road to achieving near-term quantum advantage. Quantum information is extremely fragile, so performing reliable quantum computation requires a complete understanding of the noise affecting a quantum computer. The inventors show that such a characterisation is achievable when the quantum computer is simulating a natural system from the physical world: a gas of non-interacting particles or fermions. These "free-fermion" systems are a natural starting point from which to analyse noise in more powerful models of quantum computation. By taking advantage of the mathematical structure of such systems, it is possible to learn a model for the noise for many different free-fermion operations simultaneously.

The present disclosure provides a solution to this problem for quantum computations which may incorporate systems of fermions, which have particular relevance in a variety of problems spanning fields such as materials science and quantum chemistry. The approach is feasible for analysing quantum computing architectures with fermionic structure. This setting has proved particularly challenging for previously developed noise-characterization techniques due to the continuous nature of fermionic dynamics as well as the nonlocal nature of fermionic antisymmetric exchange statistics.

The inventors have identified that within the field of noise process characterisation in quantum computing, there exists the technical problem of refining the noise characterisation on a gate-by-gate basis. As is common in the quantum computing industry, one major factor is that noise processes affect the accuracy of a physical computation on the medium encoding quantum information. A typical industry-specific scenario may comprise an engineer seeking to quantify the noise of an individual control operation. One may imagine that there may be multiple control operations (e.g. rotations of a qubit around an axis to change its state) that can lead to a desired outcome (a 180-degree flip of a qubit, for example). Given the scenario wherein there are two available control operations given by *π-* and (-*π*)-pulses, the physical operation of one (that is, implementation on quantum hardware) may introduce more noise into a system than the other. This could for example be due to influences from magnetic fields or other forms of electromagnetic radiation present in the quantum hardware architecture. Therefore, it is important to decide, given a choice of control operations to physically manufacture and run as part of the quantum hardware architecture, which control operations to use by determining the noise parameters associated to individual gates.

At a high level, FACES operates in the following manner. Given a set of experimental gates the user wants to apply, FACES proceeds by the following steps.
1. It prescribes a set of circuits C composed of these gates. This set satisfies the following properties:
   a. Each circuit in 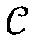 performs a specified action - which the method prescribes - in the absence of noise.
   b. The set 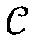 is diverse enough - by a criterion specified by a user - to give complete information about the noise.
   Beyond these two restrictions, the user is free to choose the collection of circuits and may make this choice subject to any additional constraints they have.
2. Next, FACES enlarges this collection of circuits 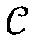 to one interspersed with random free-fermionic operations such that the net effect is unchanged. This averages the noise on each gate such that, for each gate, the noise is described by a small number of aggregate parameters.
3. For each averaged element of 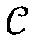 FACES requires that the user prepare a prescribed input state, apply the circuit, and make a prescribed measurement on the state output by the circuit. The frequencies of the observed outcomes are aggregated to learn the probability distribution over outcomes for each averaged circuit in 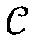
4. FACES applies a transformation from the learned probability values to the set of parameters, called circuit eigenvalues, describing the aggregate noise on each circuit in C.
5. FACES fits the learned circuit-level parameters to a log-linear model in the gate noise eigenvalues.

FACES can be applied to quantum hardware architectures for which the quantum information is mediated by fermions or for which free-fermionic (i.e. matchgate) operations constitute the fundamental gate set, such as superconducting devices. It will be apparent to the skilled person that matchgates are a specific example of two-qubit, nearest neighbour quantum gates; that is, gates that only act on consecutive qubits pairs. Due to the flexibility in how the noise can be parameterized, FACES is particularly well-suited to architectures implementing encoded matchgate operations on qubits, such as those involving a qubit-to-fermion mapping like the Jordan-Wigner transform or the compact fermionic encoding. Such encodings are usually already well-understood by the user, as they are central to running the relevant materials or chemistry simulation, and the disclosed method is independent of the particular encoding as long as it exists. Subject to this constraint, FACES is also independent of what the user chooses to call a "gate", or "control operation". For example, it can be a highly fundamental operation to the hardware or a group of such operations. Control operations will therefore be defined to be the operations of interest for which a user wishes to understand the noise of that process, with the understanding that a given control operation may further be constructed from *fundamental* operations. Finally, FACES further affords a large degree of flexibility with respect to fermionic encodings and noise parameterizations.

Additionally, one of the main results includes an algorithm for extracting the FLO-averaged eigenvalues of the elements of an elementary set of FLO unitary gates. The protocol is rigorously proved to have an efficient sample complexity when reasonable assumptions about the setting are met. The efficacy of the protocol is also demonstrated by numerically showing that it is feasible for realistic error rates.

Though FLO and matchgate circuits are comprised of non-Clifford gates, they are nonetheless efficiently simulable classically. However, they become universal for quantum computation when additionally including the application of arbitrary Clifford gates; for example, even adding nearest neighbour SWAP operations between qubits is sufficient. Similarly, Clifford circuits become universal for quantum computation with the inclusion of arbitrary matchgates. Since characterizing gate dependent noise in Clifford circuits is a well-studied problem, FACES has the additional benefit of being operable in tandem with other methods to estimate averaged noise in universal gate sets. Furthermore, FACES finds natural applications in the setting of quantum materials and chemistry simulations, for which fermionic degrees of freedom are fundamental.

Disclosed herein is a method for characterizing noise processes in control operations run on a quantum computer, the method comprising: receiving, as inputs: a set of *K* control operations *G =* {*G*₁*,* ... *, G_{K}*}, each control operation corresponding to a given quantum gate; and a set of specific actions each defining the overall effect of a quantum circuit in the absence of noise; constructing from the set of control operations a set of at least K enlarged quantum circuits, wherein each enlarged quantum circuit is constructed by: arranging members of the set of control operations G to construct a set of quantum circuits, each of the quantum circuits in the set of quantum circuits being different from one another while being arranged to perform one of the specific actions from the set of specific actions; and enlarging each quantum circuit in the set of quantum circuits to form the set of enlarged quantum circuits, wherein enlarging each quantum circuit includes inserting additional operations into each quantum circuit in the set of quantum circuits; for each enlarged quantum circuit in the set of enlarged quantum circuits: preparing, on the quantum computer, an input state; enacting, by the quantum computer, one or more procedures corresponding to the operations representing the enlarged quantum circuits to the prepared input state to provide an output state; and making a prescribed measurement on the output state; for each action in the set of specific actions: constructing probability distributions from outcomes of the prescribed measurements on the output state for each enlarged quantum circuit; collecting aggregate parameters {*Λ*₀, *Λ*₁*, ... , Λ_{N}*} from each enlarged quantum circuit, wherein the aggregate parameters are associated with the control operations of each circuit in the set of quantum circuits; mapping the constructed probability distribution to the aggregate parameters; fitting the aggregate parameters to a gate noise model; and computing at least one noise parameter associated with every control operation based on at least one of: the gate noise model; the aggregate parameters; and/or the probability distribution.

In this document unless otherwise stated, control operations are defined to be the physical manipulation of quantum information, for instance represented as a qubit, qudit, or set thereof, that takes place in the real world on a quantum circuit. This is distinct from a logic/logical operation/gate, defined herein to be the theoretical or mathematical description of the end result of an operation on said quantum information. More details are provided below, but briefly, one may imagine a logical gate having a matrix or other mathematical representation, which may be applied to a state vector (a representation of a qubit, say), in order to reveal a new vector describing the effect of the operation on the input. By comparison, the control operations may comprise a real-world manipulation of an input state of a quantum system (e.g. a qubit) as part of a quantum computational process. To be specific, as examples, the manipulation may be carried out by any of (depending on the nature of the substrate in which the qubit is provided):
electromagnetic pulse sequences;
magnetic fields; and/or
lasers.

Control operations may therefore be time-dependent and require other considerations, such as the application of a certain electromagnetic pulse sequence for a sustained period of time, or at a specific frequency or amplitude.

One important distinction between control operations and logical operations can be given in the following example. A logical operation that flips the state of a qubit from the ground state to the excited state has a matrix representation that defines the output as being, in this case, the excited state. A control operation may well arrive at the same output, but one can think of the control operation as tracking the direction in which the manipulation has occurred. An example revisited below concerns the *π*-pulse and the (-*π*)-pulse; both will transform a state from the ground state to the excited state, but they do so in opposing directions (say clockwise and anticlockwise), and over a period of time whereby the input ground state is subject to some form of stimulus (e.g. microwave radiation), over that same time period. Importantly then, it can immediately be seen that potentially many control operations can give rise to the same logical operation, and that many fundamental operations can give rise to a control operation of interest. There are many examples for this latter point. One particular example would be where a fundamental operation may comprise applying a magnetic field for a specific amount of time *T,* but a user may need to understand the noise from a magnetic field applied for a duration 3*T.* In this case, the fundamental operation may be a magnetic field for time *T,* and the control operation may comprise 3 applications of that fundamental operation, that is, applying a magnetic field for a time 3*T.*

A manufacturer or user of quantum computing devices may for instance wish to understand the noise properties, or characteristics, of a particular physical control operation. With multiple control operations that correspond to the same logical operation, it is also true that, in general, different control operations may have different noise characteristics. Therefore, it is of interest to characterise the control operations, to better inform the design of quantum circuits using control operations that generate the smallest amount of noise in a given circuit. In the above example this may simplistically be thought of as deciding whether a state-flip operation is better implemented (in a noise-reduction sense) by implementing the *π*-pulse or the (-*π*)-pulse.

It is important to highlight that control operations, whilst being physical phenomena, will also admit a mathematical description. This should be borne in mind, as the use of the term "control operation" will correspond to both the mathematical description of the physical phenomenon and the phenomenon itself. Throughout this document, an indication which interpretation is appropriate in addition to the context of use will clarify this further. For example, referring to a control operation as input to a computer program is necessarily in a mathematical form, whereby in comparison, enacting a control operation on quantum hardware is clearly a physical operation.

There is a further distinction to be made, in that a control operation, in particular its mathematical representation, can be both "ideal" and "noisy". These options are distinguished throughout, for instance, by referring to the ideal case as being "in the absence of noise". It will be apparent to the skilled person that in practice, no quantum computer is currently capable of enacting control operations in an ideal, noiseless way, due to the inherent nature of the technology.

Broadly, the above process starts by receiving a set of control operations as inputs to the FACES protocol. As noted above and elsewhere, the control operations may comprise physical operations, which may again be composed of more elementary, fundamental operations (recall the example of applying a magnetic field for a time 3T above). For instance, a manufacturer may be interested in characterising the noise of a *π*-pulse and (-*π*)-pulse, to decide which way to implement a SWAP gate in a physical quantum circuit, but only has access to more fundamental gates that make up these pulses. The control operations in this case will be the pulses, despite the fact they are composed of more elementary, fundamental operations. To generalise, FACES is indifferent as to what constitutes a control operation in this regard; control operations can be single gates, or control operations composed of a plurality of gates or other fundamental operations. This generalisation is highly beneficial to the user; being able to define components of a quantum circuit however the user wishes, has the technical advantage characterising the noise on whatever scale of circuitry the user wishes. From a manufacturing perspective, this enables the user to quantify whether purchasing "off-the-shelf" components would give rise to a more accurate, better performing quantum computer, or whether the user is best going with smaller, more fundamental control operations, given the type of circuit they wish to run.

The method continues by receiving a set of specific actions. In this document, unless otherwise stated, a specific action is defined to be the overall result of applying a quantum circuit, which itself will be composed of the control operations of interest. It is important to include these as input, as the protocol will construct circuits composed entirely of the control operations of interest, using the requirement that each quantum circuit (in the absence of noise) has the overall effect of one of the specific actions, helps ensure that extraction of noise information is performed with both accuracy and efficiency. As will be discussed in more detail later, one optional choice for a specific action is the identity map; the motivation being that any deviation in output state from the input state after the protocol is enacted can very easily be attributed to noise, as the theoretical setting predicts there should be no change at all.

It can therefore be seen that a set of specific actions, and a set of control operations, are the only elements needed to construct a set of quantum circuits composed from elements of a set of control operations.

The method continues by enlarging each quantum circuit in the set of quantum circuits, whilst preserving the specific action. The enlarging of each quantum circuit comprises inserting additional operations amongst the control operations that define the original quantum circuit. This serves the technical purpose of averaging noise on each control operation, which allows each control operation to be associated with a small number of parameters, which are referred to as "aggregate parameters".

So far, the procedure discussed may be implemented on a classical computer, which is capable of receiving these instructions and building a model of the enlarged quantum circuit. The classical computer is then further configured to communicate with a quantum computer, which in turn constructs the quantum circuit. There is therefore a technical effect on a process outside of the classical computer; that effect being the control of hardware and machinery external to the classical computer.

The instructions are communicated to the quantum computer, wherein the quantum computer is configured to interpret and enact these instructions. As stated above, the instructions comprise three key steps for the quantum computer to implement.

The preparation of an input state involves physically manipulating a qubit, qudit, or set thereof, so that it is, at least probabilistically, in one particular starting state of interest. In practice, this can be done for instance using a Stern-Gerlach machine, whereby a beam of (say) electrons are passed through a magnetic field. As the electrons leave the machines and are detected, their deflection up or down is recorded, which gives rise to the state (*a, b*)*^{T},* with |*a*|² + |*b*|² = 1. The magnetic field can then be adjusted to probabilistically achieve desired values for *a* and *b.* Another example, which would naturally lend itself well to fermionic encodings would be superconducting qubits.

To enact one or more procedures corresponding to the operations representing the enlarged quantum circuits to the prepared input state to provide an output state, is to enact each enlarged quantum circuit in its entirety. The term "procedures" is used generally and intended to optionally comprise the assembly of physical quantum circuitry, which itself may comprise lasers, beam splitters and the like, as well as sending the input states through the enlarged quantum circuit. The output state is the quantum state that exists as a result of passing the input state through the circuit.

The prescribed measurement to be made on the output state may optionally comprise detection hardware capable of reading each state as it completes the quantum circuit. Importantly, these measurements relate to actual physical phenomenon of a physical system, wherein the measurements are of the actual states of real, physical quantum systems. It is this real-world data that FACES seeks to measure, record and process to understand noise processes in such systems.

At this stage of the protocol, the measurement of the enlarged quantum circuit outputs constitutes classical data, and the quantum data is destroyed during measurement. FACES seeks to build up a model from this classical data to describe the quantum properties of the circuit. FACES does this by repeating, for each enlarged quantum circuit, many instances (or runs) of the quantum circuits. Each run and subsequent measurement is recorded, and the collection of measurement results are combined to form an estimate for a probability distribution describing the quantum output of the circuit. The more circuit runs that occur give rise to a better approximation for the resulting probability distribution. Recalling the Stern-Gerlach machine, clearly passing four electrons through the apparatus resulting in spins: "up, up, up, down" gives much less information on the probability distribution (the values of *a* and *b* as described above) than is available when one hundred, or even one thousand electrons are passed through the apparatus.

As far as the general protocol is concerned, the classical information (measurement results) then requires post-processing, as the noise data to quantify is hidden inside this classical information. To this end, the gathered probability distributions account for one input to the post-processing part of the protocol; FACES further collects what are called "aggregate parameters". Note that in this document, the terms "aggregate parameters" are synonymous with "circuit eigenvalues", and serve the technical purpose of aggregating the larger number of noise parameters into a smaller set, which again is achieved through enlarging the quantum circuit.

The collection of aggregate parameters/circuit eigenvalues is derived from the estimated probability distributions collected during measurement. This association is derived from a suitable mapping which accurately associates the probability of different outcomes of a certain experiment type with eigenvalues of a particular quantum circuit. The protocol collects aggregate parameters from each of the enlarged quantum circuits, but these aggregate parameters are associated with the control operations of each circuit in the set of quantum circuits. This is advantageous because the aggregated parameters obtained through the enlarging of the quantum circuit therefore provide information on the original circuit of interest, that is, the original quantum circuit comprising the control operations of interest.

It is noted here that the collection of aggregate parameters (circuit eigenvalues) is taken from each *collection* of enlarged circuits enlarged from the same quantum circuit or set of quantum circuits, as opposed to collecting these parameters from each enlarged circuit individually. This may be understood to correspond to one collection of aggregate parameters arising from the entire collection of enlarged quantum circuits. Collecting, storing and processing according to aspects of the method presented herein one collection of aggregate parameters for every enlarged circuit run or analysed has the technical benefit of allowing the method to operate more efficiently, by not having to run separate parts of the method for different collections of aggregate parameters. However, the method can also cater to the case where the aggregate parameters are collected per experiment type, (e.g. *x*-type or *z*-type), per circuit individually, or indeed from parts of one or more circuits, if required.

To the aggregate parameters, the method then associates an appropriate gate noise model, wherein the goal of the previous mapping is to ensure that an appropriate gate noise model can be determined. The gate noise model is then finally responsible for outputting noise parameters, each noise parameter associated to a specific control operation. Note the importance of the gate noise model in this case; FACES is capable of taking information pertaining to noise of a quantum circuit, and converting this to noise that can be attributed to individual control operations, giving a much richer description of the noise characterisation of a quantum circuit.

Returning briefly to the manufacturing perspective, the present disclosure provides a post-processing step applied to real-world data, which is key to improving the obtained results. It is furthermore apparent that the output of the FACES protocol can inform an engineer, manufacturer or the like, on how to design and build better, more efficient quantum computing devices. Equally, a user of such systems can learn how best to implement certain quantum processing steps, from a noise perspective. In this sense, there is yet another technical effect on a process outside the hybrid (quantum and classical) system, that is, informed better quantum circuit design.

Optionally, the method of constructing the probability distributions further comprises: recording results of measurement outcomes in a basis determined by the prescribed measurement; accumulating the results of the measurement outcomes and recording their frequencies; and estimating the probability of observing specific measurement outcomes using the recorded results and frequencies. Accumulating results in this way allows for the noise to be characterised more fully and more completely than in smaller sample sizes, as noted above.

Furthermore, the method optionally comprises associating the prescribed measurement with the specific action. These features ensure that on a theoretical level, the method can predict the desired outcome, with the physical (noisy) implementation; the difference between the physical (noisy) and theoretical (ideal) is what the method seeks to describe in a refined way.

In view of efficiency of the methods disclosed herein, it may be helpful to use specific input states, wherein said optional input states may comprise either the all-zero states |0〉 and/or the all-plus states |+〉^{⊗*n*}. The choice of input state may also optionally be associated to a prescribed measurement and/or circuit type, wherein the method further optionally comprises specifying that the prescribed measurement is in the computational basis: for all-zeroes input states |0〉; and/or for identity circuits.

Optionally, the method further comprises defining the prescribed measurement as a Pauli-*Y* measurement on at least one qubit and a measurement in the computational basis for the remaining qubits: for all-plus input states |+〉^{⊗*n*}; and/or for *U*₊-unitary circuits. Input states other than |0〉 and |+〉^{⊗*n*}, and other corresponding measurements will also work. In particular, one can double the system size, prepare Bell-pair inputs between the two copies, apply two copies of an arbitrary FLO circuit, and measure the output in the Bell basis to obtain an equivalent sampling protocol. Another point to make is that the operation *U*₊ is only defined as any unitary which maps a given fixed input state to a given fixed output state, so there are many different realizations of *U*₊ that could be used as well.

Specifically, the method identifies a particular basis to measure the result of the quantum circuit application with the particular input state. For the above optional features, each of the identity circuit and the *U*₊-unitary circuits are examples of a specific action. That is, the set of specific actions may further optionally comprise the identity operation and/or the unitary operation *U*₊, as specific examples of elements of the Clifford group. Optionally, there exists variations beyond the *U*₊-unitary, which would correspond to measuring a different number of qubits in the Pauli-Y basis, in different positions. Therefore, there is a link between the location and number of Pauli-Y measurements, which are determined by the variation of the specific unitary defining a specific action.

It is possible to use other input states and measurements. Typically, considerations for such specific actions and input states comprise ease of computability, or ease of physical implementation on a quantum computer, or similar.

Optionally, the method further specifies that the additional operations comprise random and/or free-fermionic operations *V,V*^{†}*.* The use of free-fermionic additional operations here is equivalent to "free-fermionic averaging". This specified form of averaging maintains the property above of aggregating parameters, and through the structure of the specific operations, is optionally highly suited to processing quantum information mediated by fermions.

The method may also specify that each random and/or free-fermionic operation *V,V*^{†} is Haar measurable. The requirement of Haar measurability ensures that the elements of the quantum circuits, the individual gates, are sampled uniformly. That is, these gates may be Haar distributed, such that they may be chosen (that is, uniformly drawn) from the set of all random and/or free fermionic operations as above.

Optionally, the method further comprises enlarging each quantum circuit by including at least one additional operation before and/or at least one additional operation after each operation in the quantum circuit. One of the benefits of this application of additional operations is that the noise pertaining to an individual gate can be obtained using an eigenvalue sampling method across these additional operations in the enlarged quantum circuit, which has the technical effect of refining the scale on which noise information can be extracted. The addition of further operations defined in this way may include; interspersing each control operation in the quantum circuit with other operations (either fundamental operations, random unitary operations, or other control operations), or applying a pair of operations before and after some or all of the control operations in the circuit. Further, optionally assigning additional operations before and/or after each control operation in the quantum circuit allows one enlarged part of the circuit to be associated to a specific control operation from the original quantum circuit. This has the effect of assigning specific aggregations of parameters (induced by the additional operations) uniquely to a specific control operation. The method also caters to the scenario when not every control operation, or general operation in the circuit needs additional operations placed adjacent to or around it for the method to still work. That is, one may choose to add operations to specific parts of the circuit and not others, or include operations in the circuit that are not necessary for the characterisation of noise in certain control operations of interest. It is noted however that this may not be the most efficient use of resources, and may even hinder the accuracy of the method by introducing additional errors into the method that could propagate into the final estimate for the noise parameters, but this addition is nevertheless intended to be covered by the present disclosure.

There is therefore a wide range of operations that can be added to each quantum circuit, which may be collectively highlighted by:
1) At least one control operation has additional operations placed before and after it;
2) At least one group of multiple control operations has additional operations placed before and after the group, the group comprising at least two control operations and wherein any two groups may comprise a different number of control operations; and
3) A mix of single control operations and grouped control operations having addition operations placed before and after them.

It should be noted that there is the option to define a group of control operations to be the whole circuit. In this case however the noise parameters produced will be descriptive of the whole circuit. A benefit of the method set out in this disclosure is therefore to be able to define a granularity specified by a user by subdividing the circuit in this way, and to compute noise characteristics at that granularity, providing an enhanced noise characterisation protocol for quantum circuit design.

Examples of the above circuits may be given by (*for j*₁*, j*₂ *...jₘ* ∈ {1,2, *... K*}):
1) All control operations have additional operations placed before and after them, i.e. a quantum circuit given in terms of the control operations *G*₁*, G*₂, ... *G_{K}* by *G*_{*j*₁}*, G*_{*j*₂} ... *G_{jₘ}* may be replaced with the circuit (*U*_{*j*₁}*G*_{*j*₁}*V*_{*j*₁})(*U*_{*j*₂}*G*_{*j*₂}*V*_{*j*₂}) ... (*U_{jₘ}G_{jₘ}V_{jₘ}*) or *V*_{*j*₀}*G*_{*j*₁}*V*_{*j*₁}*G*_{*j*₂}*V*_{*j*₂} ... *V*_{*j*_{*m-*1}}*G_{jₘ}V_{jₘ}.*
2) At least one control operation may have additional operations placed around it, i.e. a quantum circuit given in terms of the control operations *G*₁*, G*₂*, ... G_{K}* by *G*_{*j*₁}*G*_{*j*₂} *... G_{jₘ}* may be replaced with circuits such as (*U*_{*j*₁}*G*_{*j*₁}*G*_{*j*₂} ... *G_{jₘ}, G*_{*j*₁} (*U*_{*j*₂}*G*_{*j*₂}*V*_{*j*₂}) ... *G_{jₘ}*, *G*_{*j*₁} ... (*U_{jₗ}G_{jₗ}Vjl* ... *G_{jₘ}* or indeed *G*_{*j*₁}*G*_{*j*₂} ... *U_{jₘ}G_{jₘ}V_{jₘ}.*
3) Groups of control operations have additional operations placed before and after them, i.e. a quantum circuit given in terms of the control operations *G*₁, *G*₂*, ... G_{K}* by *G*_{*j*₁}*G*_{*j*₂} *... G_{jₘ}* may be replaced with circuits (*U*_{*j*₁}*G*_{*j*₁}*V*_{*j*₁})*G*_{*j*₂}*G*_{*j*₃}*G*_{*j*₄}(*U*_{*j*₅}*G*_{*j*5}*G*_{*j*₆}*G*_{*j*₇}*V*_{*j*₇}), or similar, as described herein.

Throughout this document, it will be seen that the notation for individual quantum gates may change, where it will be made clear either explicitly or in context what constitutes quantum gates or quantum circuits. For example, as above, when referring to a collection of quantum gates without specific reference to a specific circuit, the notation *G*₁, *G*₂*,* ... *G_{jₘ}* may be used. Alternatively, as can be seen below, if a collection of quantum gates is with reference to a specific quantum circuit, then further subscripts may be used and quantum gates represented by *C_{j,m},* or *C_{jₘ}.* For example, a *j*^{th} quantum circuit *Cⱼ* composed of m quantum gates may be written *Cⱼ = C*_{*j,*1}*C*_{*j,*2} ... *C_{j,m} = C*_{*j*₁}, *C*_{*j*₂} ...*, C_{jₘ}*.

It will be appreciated that these specific examples are a few of many possibilities that may be used to refine the output noise parameters pertaining to individual gates, control operations, or groups thereof. Other examples can be found below, in the rest of the disclosure.

Optionally, the method further specifies the specific arrangement or form of the additional operations. That is, wherein the inclusion of the at least one additional operation before and/or at least one additional operation after each operation in the circuit is optionally arranged to perform twirling of a gate in the circuit. One of the benefits of twirling is to convert the noise into terms characterised by Pauli errors, whilst unaffecting the effect of the theoretical, logical ideal circuit. In fact, the probability of a given Pauli error is made uniform over all of the Pauli errors from a given set (so these Pauli errors are not completely general, and in fact have some additional structure to them).That is, twirling maps an arbitrary error channel to a Pauli error channel, without affecting the specific action of the quantum circuit, in the ideal view. Note that other twirling operations may be applied, such as that of randomly sampling single-qubit twirling gates and sandwiching them between a two-qubit Clifford gate. The governing criterion is that the net effect of the twirled and untwirled gate must be the same in the absence of noise. As described above with reference to the addition of operations, it should be noted

that the method does not need to twirl all of the individual control operations. The main benefits of this aspect of the method arise from being able to potentially group fundamental operations together, to form the control operations that define the circuit, and then to twirl each group/control operation such that the aggregate noise on a group commutes with the subsequent gates. Again, this is a highly advantageous feature, that can be viewed as a freedom of the method disclosed herein, since the characterization of noise at certain aggregate levels can be specified, in addition to the noise on each individual fundamental operation. Again, as above, other operations may be included into the circuit, and not twirled as with other control operations. This procedure may again hinder the effectiveness of the method, but is nevertheless intended to be covered by the present disclosure.

Optionally, the method of twirling further comprises associating each quantum circuit in the set of quantum circuits with a set of randomly sampled circuits by replacing ${C}_{j , l} \to \left({U}_{j , l}{V}^{†}{U}_{j , l}^{†}\right) \left({C}_{j , l}\right) \left(V\right)$ , for each control operation *C_{j,l}* in the quantum circuit *Cⱼ*, where *U_{j,l}* is the ideal gate corresponding to *C_{j,l}* and *V* is a Haar random ideal FLO unitary sampled independently for each *C_{j,l}*. This highlights one form of insertion of the above additional operations. The net effect of the ideal, noiseless circuit is preserved under the mapping ${C}_{j , l} \to \left({U}_{j , l}{V}^{†}{U}_{j , l}^{†}\right) \left({C}_{j , l}\right) \left(V\right)$ *,* but the addition of the extra ${U}_{j , l} {V}^{†} {U}_{j , l}^{†}$ and *V* serve the technical purpose of averaging the noise, which as discussed above, allows the noise on each resulting element $\left({U}_{j , l}{V}^{†}{U}_{j , l}^{†}\right) \left({C}_{j , l}\right) \left(V\right)$ to be described by a small number of parameters.

As previously mentioned, optionally, the method of enlarging each quantum circuit in the set of quantum circuit preserves the associated the specific action associated with each quantum circuit. That is, in the ideal, noiseless logical circuit, the effect of a circuit *Cⱼ* ∈ 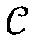 and the effect of the corresponding enlarged quantum circuit (optionally, given by the mapping above applied to every operation in the quantum circuit) have the same effect in the absence of noise. This has the technical effect of highlighting the differences between the theoretical logic gates and the control operation as enacted by the quantum computer itself, in that any differences that arise can be closely attributed to noisy implementations of quantum circuits.

Optionally, the method further describes the set of specific actions as being elements of the Clifford group. Elements of the Clifford group used in this context provide a computationally convenient platform to measure the output of the quantum circuit on an input state. This is achieved where the output of a given experiment is naturally a product state, which are efficient and comparatively easy to measure, which helps optimise the performance of the method. As examples, apparatuses for measuring a quantum state (and specifically in this case a product state) can include: photodetectors, oscilloscopes, spectrum analysers and waveform generators.

The method may further be described to include the mapping as a linear transformation. Here, a linear transformation is useful to efficiently combine and relate the observed probabilities from the observed quantum computational measurements, aggregating them by classification into individual circuit components; the control operations.

Furthermore, the linear transformation may be given by a Kravchuk transformation. The adoption of the Kravchuk transform in this context links the error probabilities of a fermionic linear operation (FLO)-twirled channel to the eigenvalues associated to a given circuit. The choice to use the Kravchuk transform as this mapping is motivated by the mathematical framework which underpins this invention. In this case the model can still make predictions, despite having not been fed certain samples during training. In the present case, the Kravchuk transform is aggregating the circuit eigenvalues.

Optionally, the fitting of the aggregate parameters to the gate noise model comprises relating the aggregate parameters to the noise parameters via a log-linear model. The motivation to use the log linear model in this context is given by exploiting the mathematical properties of the logarithm. In particular, the repeat use of a particular control operation is characterised by an exponent, which via logarithmic identities can be identified with coefficients that count the number of occurrences of that particular control operation in the circuit.

The fitting of aggregate parameters to a gate noise model optionally further comprises recording the number of appearances of each gate in each quantum circuit in the set of quantum circuits. The recordal of the number of occurrences of each gate in the quantum circuit is important in that the noise inherent in a circuit comprising gates is dependent on the frequency of the appearance of different gates. Therefore, in order to quantify how noisy a particular gate is, it is important to relate the noise arising from the collections of the same gates to the noise of an individual gate. Thus, the recordal of occurrences of each gate can then be used to normalise the contribution of many gates, resulting in a description of noise from one gate individually.

Optionally, recording the number of appearances of each gate comprises computing at least one design matrix. The entries of the design matrix correspond to the number of occurrences of a particular gate in a particular quantum circuit. The specific use of the design matrix is useful to represent a linear transform from the empirical estimates of the probability distributions to the estimators for the associated circuit eigenvalues.

Optionally, computing at least one noise parameter comprises applying linear regression to the log-linear model. The linear regression model estimates the relationship between the circuit eigenvalues (noise parameters) and the aggregate parameters. The linear regression models may optionally be applied to each quantum circuit type in turn, that is, one regression model for the first circuit type, a different regression model for the second quantum circuit type, and so on. The method may also optionally comprise combining the linear regression models into one, large system, describing the relationship between the circuit eigenvalues and aggregate parameters for all quantum circuit types.

Furthermore, the computing of the at least one noise parameter may optionally comprise solving a linear system of the form *Ax = b* for *x,* wherein the aggregate parameters are related to *bⱼ* via *bⱼ =* - log(Λ*ⱼ*) and the noise parameters *ξⱼ* are related to *xⱼ* via *xⱼ =* -log(*ξ*^{(*j*)}), as well as exponentiating each *xⱼ* to recover each noise parameter *ξⱼ*. Here the matrix *A* is the aforementioned design matrix, where a different *A, x* and *b* may optionally be selected depending on the quantum circuit type as discussed above. Note the terminology of "aggregate" and "noise" parameters here. Both terms describe noise, but more specifically the aggregate parameters describe the noise arising from a collection of gates, or control operations, and the noise parameters are representative of noise characteristics of individual control operations. Again, as discussed above, the aggregate and noise parameters are then related by the number of occurrences of each control operation, hence the utilisation of the design matrix (or more generally, the recorded number of occurrences) to map the observed aggregate noise to individual control operations.

Optionally, the method also specifies that the gate noise models are described by learnable parametrization. In practice, this models the noise as a separate operator that acts on a given gate, which is associated to but distinct from the ideal, noiseless gate. Together the two operations are combined to describe the noisy gate, or implementation of a control operation. This model is characterised by the fact that the noise operator will admit specific eigenvalues, the eigenvalues that characterise the noise associate to a specific gate, which the method ultimately seeks to find.

Optionally, the method also specifies that the gate noise models are Markovian. That is, the characteristics of a particular noisy gate are unique to the gate itself, and information pertaining to the individual noise parameters associated to a specific control operation as discussed above, do not affect the noise parameters of other gates, which helps ensure that the recovered noise parameters are that of a specific control operation of interest.

Optionally, the method also specifies that the gate noise models are time stationary. This feature states that the noise parameters associated with a specific control operation are fixed, and does not change over time, such that a (probabilistically) fixed value characterising the noise on a control operation can be obtained, regardless of where the control operation appears in the quantum circuit, or to what other operations the control operation is adjacent to.

Optionally, the method further specifies that each quantum circuit in the set of quantum circuits exceeds a diversity threshold dictated by a diversity criterion *δ*. The diversity criterion ensures robustness to error on the observed circuit eigenvalues, which could have important consequences for the model disclosed herein. Where the observed circuit eigenvalue is very small (even if the true eigenvalue is not small), there is an increased risk that errors on this estimate can propagate to large errors on the associated gate eigenvalues. For each experiment type, the diversity criterion then specifies that each estimated quantum circuit eigenvalue is sufficiently large that the constituent gate eigenvalues can be robustly recovered.

Additionally, the method optionally specifies that the design matrix is truncated to only include elements which are above the diversity criterion *δ*. That is, the method can optionally decide to reduce an initially calculated set of design matrices, based on the diversity criterion, to a set of design matrices whose associated linear system is robust to small errors on the circuit eigenvalues. As will be apparent, given a set of control operations, there is likely to be a significantly higher number of quantum circuit arrangements that are possible (subject again to satisfying a specific action) than those which are useful or satisfy the diversity threshold criterion. Therefore, the truncation of matrices ensures that enough crucial information is processed, without excess, which positively affects the computational cost of implementing the quantum circuits.

One way in which the method can be guaranteed to characterise the noise of every control operation is through the optional specification that the set of quantum circuits is complete, in that at least one design matrix is of full column rank and/or full row rank. Note that by satisfying this condition of completeness, at least one matrix from the set of design matrices is able to map all information arising from the aggregate parameters to the individual noise parameters.

Optionally, the user may include additional constraints further specifying a particular model or dynamic they wish to run. Here, the additional constraints are predominantly related to the physical building of the quantum computer. For example, a user of FACES may be a quantum computer manufacturer, with physical constraints (e.g. the set of native gates for the hardware) that could restrict the set of control operations that can be used, or even specifying that certain blocks of control operations need to be used in combination or in a specific order. This latter point may arise if say, a user has access to a control operation that comprises a series of more primitive gates or control operations. A more specific example would be where a user wishes to quantify the noise associated to a *π*-pulse, but is only permitted to use equipment capable of *π*/2-pulses. Here the user can specify that they want to understand the noise on a *π*-pulse using their construction of *π*/2-pulses, or they may wish to specify that they want to understand the noise characterisation of a first *π*/2-pulse in comparison to a second *π*/2-pulse. Each option can be tested by specifying these inputs (as distinct control operations) in the FACES protocol.

The user may optionally require that other circuit-level considerations be implemented in the disclosed method, for example, where a certain control operation must appear in a specific place in the quantum circuit, or any variety of considerations needed to preserve the time-stationary or Markovian assumptions. In general, it is clear that FACES is indiscriminate in what a user chooses to call a control operation, and that many more examples of such considerations and potential constraints exist.

Also disclosed herein is a hybrid quantum-classical computing apparatus comprising at least one classical processor and at least one quantum computer communicatively coupled with one another, the hybrid quantum-classical computing apparatus being configured to perform the steps of: receiving, as inputs: a set of *K* control operations *G =* {*G*₁, *... , G_{K}*}*,* each control operation corresponding to a given quantum gate; and a set of specific actions each defining the overall effect of a quantum circuit in the absence of noise; constructing from the set of control operations a set of at least *K* enlarged quantum circuits, wherein each enlarged quantum circuit is constructed by: arranging members of the set of control operations G to construct a set of quantum circuits, each of the quantum circuits in the set of quantum circuits being different from one another while being arranged to perform one of the specific actions from the set of specific actions; and enlarging each quantum circuit in the set of quantum circuits to form the set of enlarged quantum circuits, wherein enlarging each quantum circuit includes inserting additional operations into each quantum circuit in the set of quantum circuits; for each enlarged quantum circuit in the set of enlarged quantum circuits: preparing, on the quantum computer, an input state; enacting, by the quantum computer, one or more procedures corresponding to the operations representing the enlarged quantum circuits to the prepared input state to provide an output state; and making a prescribed measurement on the output state; for each action in the set of specific actions: constructing probability distributions from outcomes of the prescribed measurements on the output state for each enlarged quantum circuit; collecting aggregate parameters {*Λ*₀*, Λ*₁, ... *, Λ_{N}*} from each enlarged quantum circuit, wherein the aggregate parameters are associated with the control operations of each circuit in the set of quantum circuits; mapping the constructed probability distribution to the aggregate parameters; fitting the aggregate parameters to a gate noise model; and computing at least one noise parameter associated with every control operation based on at least one of: the gate noise model; the aggregate parameters; and/or the probability distribution.

That is, disclosed is a hybrid system wherein a classical computer is in communication with a quantum computing device. The classical and quantum computers or computing components are differentiated, within the hybrid system, to emphasise the fundamentally different computing paradigms. On the classical side, a classical computer may be regarded as having a "classical processor", that is a specific classical computing hardware configuration configured to perform the steps pertaining the classical component steps of the method as described above. More specifically, the inputs (control operations and specific actions) are initially received by the classical computing component, which again is further configured to interpret the inputs, construct a representation of the enlarged quantum circuits, and a representation of the input states. Finally, the classical computing component is configured to communicate this as data, along with instructions interpretable by the quantum computing components, to enable the quantum computing component and associated quantum hardware architecture to build said quantum circuits and input states, and then to run the physical quantum circuits comprising the control operations of interest, on said input states. These procedures taken by the quantum computing component collectively refer to one or more quantum computations.

The quantum computing element further includes architecture configured to measure the output state resulting from a quantum computation. This may include any number of suitable detection methods available. The implementation of physical measurements depends on the specific architecture. To measure the state of superconducting qubits, for example, dispersive readout is most often used. Here, the qubit is coupled to a cavity with a shifted resonance frequency from the qubit itself. In this regime, the spacing between energy levels of the cavity depends on the state of the qubit, and this allows for high-fidelity readout of the qubit state.

Optionally, the quantum computer, as an element of the hybrid system, is further configured to process quantum information mediated by fermions. The present disclosure is particularly well suited to the processing of information mediated by fermions; a property derived from the fact that optional free-fermionic operations (matrices) appropriately model systems with anticommutation properties, that is, fermionic systems.

Optionally then, the quantum computer, as an element of the hybrid system, is further configured to process quantum operations, wherein free-fermionic operations constitute the fundamental gate set. This optional specification ensures that the quantum circuits are built to work efficiently with fermionic input states.

Optionally, the quantum computer, as an element of the hybrid system, comprises a plurality of qubits. The quantum computing component is particularly well-suited to architectures implementing encoded matchgate operations on qubits, such as those involving a qubit-to-fermion mapping like the Jordan-Wigner transform or the compact fermionic encoding.

Optionally, the quantum computer, as an element of the hybrid system, may comprise at least one qubit controller capable of manipulating the plurality of qubits. The manipulation of the plurality of qubits may comprise: signal generation, storage, measurement/read-out, as well as other quantum circuit preparation and execution methods common in quantum computation and known to the skilled person.

Optionally, the quantum computer, as an element of the hybrid system, may comprise a superconducting device. Superconducting devices may comprise superconducting materials, which themselves act as a quantum circuit, exhibiting quantum behaviour. Such examples include the probabilistic passing of electrons through Josephson junctions, manipulated through changing the electrical properties of molecules. Benefits to employing superconducting devices in quantum technologies include scalability, fast operation of quantum circuitry (on the scale of nanoseconds), and synergies with commonly used elements of control operation procedures, such as microwave manipulation.

Optionally, the hybrid system as disclosed, may further be configured to perform any of the method steps discussed above.

In general, in this disclosure, the completion of the quantum-specific computations and processing is met with a second classical post-processing stage. That is, the classical computing component of the hybrid system is further configured to receive and interpret measurement data pertaining to the outcomes of the quantum circuits, and further configured to continue performing the remaining steps in the method outlined above.

Also disclosed herein is one or more non-transitory computer-readable media storing instructions that, when executed by the at least one classical processor and/or at least one quantum computer, cause the at least one classical processor and/or at least one quantum computer to perform any of the above methods, the advantages for which are as set out above in the general description of the corresponding method.

The term *configured* may be interpreted here as ranging from a factory pre-settable device capable of performing only the method as described above, to general configurable hardware that when provided with necessary software, such as non-transitory computer-readable media storing instructions that may cause the general system to perform any steps of the method as set out above.

The information provided by FACES allows an engineer, or manufacturer of quantum circuits, to build improved quantum circuits. The technical process that is quantum circuit design is therefore improved by the presently disclosed noise characterisation protocol. Furthermore, said engineer or manufacturer would be aware of and capable of building quantum circuits, since as disclosed above, initially an engineer of manufacturer would have the capabilities and desire to build a quantum computer in the most efficient, optimised way, and clearly benefits from the information derivable from the present disclosure.

The invention will now be described with reference to the figures, in which:
FIG. 1 depicts a graphical representation of the FACES protocol;
FIG. 2 is a histogram depicting fermionic mode relative errors for *x* and z experiment types;
FIG. 3 depicts Algorithm 1, a method for computing estimates of gate eigenvalues;
FIG. 4 depicts Algorithm 2, a method for computing a design matrix and checking the full column rank condition;
FIG. 5 depicts Algorithm 3, a method for drawing samples from a twirled ensemble for a quantum circuit and returning an estimate of the measurement outcome probability distribution;
FIG. 6 depicts Algorithm 4, a method for computing the circuit eigenvalues for both experiment types;
FIG. 7 depicts Algorithm 5, a method for twirling control operations in a quantum circuit;
FIG. 8 depicts Algorithm 6, a method for computing the noise estimates of the gate eigenvalues subject to satisfying the full rank and diversity threshold ("cut-off") conditions;
FIG. 9 depicts a flow-chart of the general method of the FACES protocol; and
FIG. 10 depicts a hardware configuration according to an example embodiment of the apparatus disclosed herein.
FIG. 11 shows a histogram depicting the relative error of learned circuit eigenvalues.
FIG. 12 shows another histogram depicting the relative error of learned circuit eigenvalues.

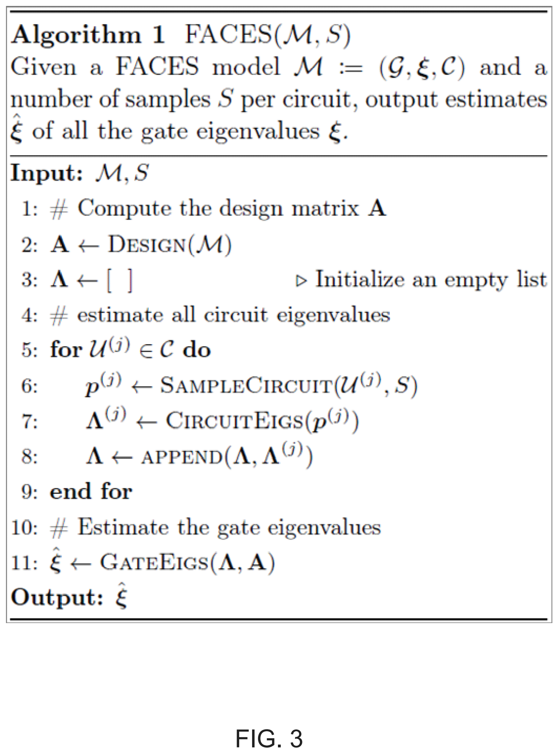

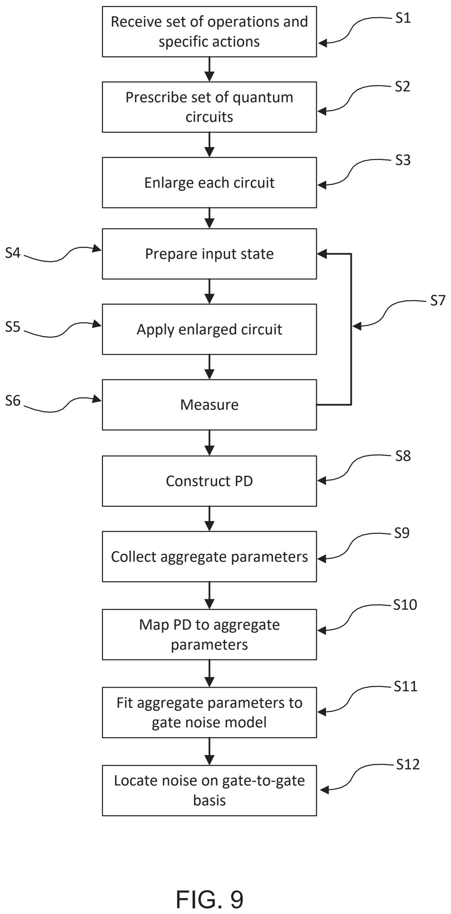

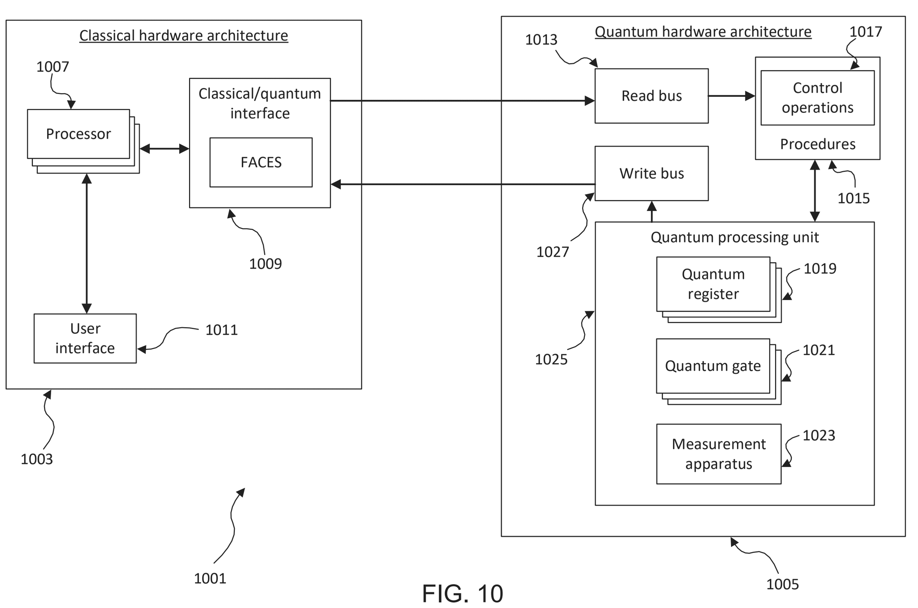

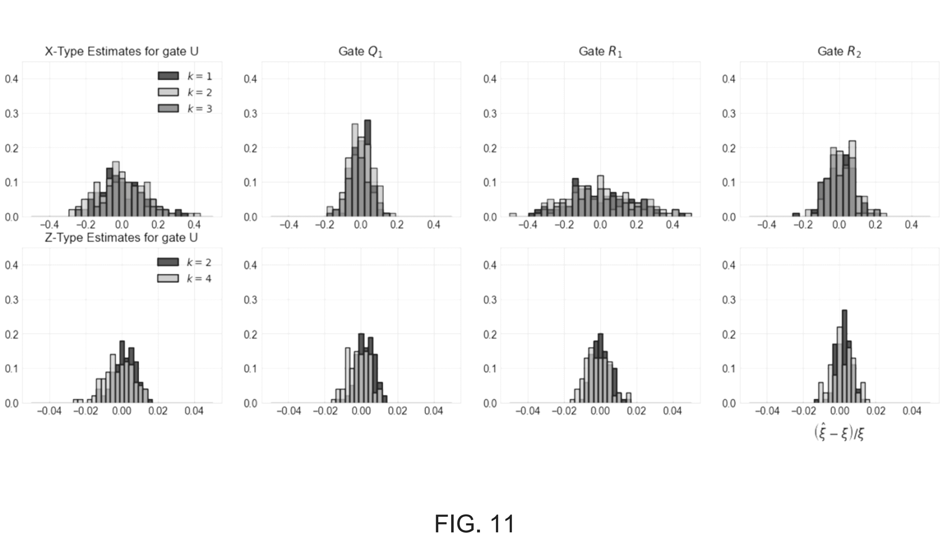

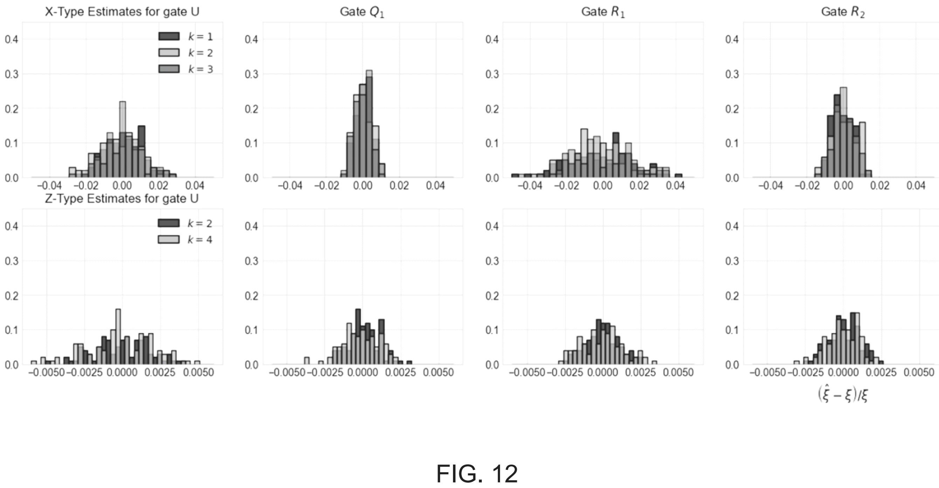

The document hereinafter is organised as follows. First, the model according to one embodiment is reintroduced, and the relevant background on fermionic linear optical circuits, Kravchuk matrices, twirling and Pauli channel eigenvalues is discussed. In the following sections, the measurement protocol, including the assumptions, stages of the protocol and sample complexity are explained, and a proof of the sample complexity guarantee is included. A numerical demonstration of the protocol and subsequently a detailed worked example highlighting the method in one particular embodiment is then provided. This will be followed by a description of the effect of not inserting additional operations around every control operation in the quantum circuit, discussed with reference to FIGs. 11 and 12. The description will conclude with a summary of the pseudocode used to implement various embodiments of the method disclosed herein, describing in further detail Algorithms 1 to 6, using FIGs. 3 to 8 respectively, a discussion of the overall method detailed in FIG. 9 and a discussion on the hardware implementation of an example embodiment detailed in FIG. 10.

### Preliminaries

An input to the protocol is the FACES model, defined as acting on 2n fermionic modes, and specified by a 3-tuple 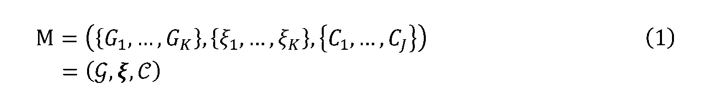 for *K* gates *Gₖ,* each of which is associated to a vector of 2*n* + 1 channel eigenvalues *ξₖ*, and *J* ≥ *K* FLO circuits *Cⱼ*. From these, the design matrix ***A*** is computed, whose integer-valued element *Aⱼₖ* specifies the number of occurrences of gate *Gₖ* in circuit *Cⱼ*. A FACES experiment constructs this matrix and samples each quantum circuit S times each. A model is *realizable* by an experiment if the noisy gates are described by a set of true values for ***ξ*** := U*ₖ **ξ**ₖ*.

The following results apply to the realizable setting (that is distinct from the *agnostic setting,* which allows for the possibility that the true gate noise is not represented by the model). It is stated informally as the result of a FACES experiment, wherein the experiment returns an estimate ***ξ̂*** for the true gate noise eigenvalues ***ξ*** satisfying ${\left‖\hat{ξ}-ξ\right‖}_{∞} \leq {\left‖{A}^{+}\right‖}_{∞} ε ,$ where ***A*⁺** is the pseudoinverse of the design matrix ***A*,** with *S* = *O*(*n*log(*J*)/ε²) samples per quantum circuit. To give the result of (2) sufficient context with respect to an example model of the form of Equation (1), the necessary mathematical framework will be introduced below.

### Fermionic Linear Optics

Recall that a control operation is one that the experimenter performs on the quantum computer (e.g. a *π*-pulse), and is the physical hardware operation that generates the noise a user wishes to quantify. Such an operation may itself be composed of more elementary processes (or fundamental operations). A logical operation is the effective operation on quantum information resulting from a specific control operation. For example, a *π* pulse and -*π* pulse correspond to the same logical operation, but are distinct control operations. This distinction is important insofar as two different control operations may correspond to the same logical operation, but are subject to different noise processes. A task of the present disclosure is to provide a method and system to learn the noise on every control operation individually.

Fermionic linear optical (FLO) circuits constitute the most general group of unitary quantum circuits that describe free-fermion dynamics. This group is isomorphic to the group of matchgate circuits on many-body qubit systems by the Jordan-Wigner transformation. For the purposes of the present disclosure, the discussion may frequently be phrased in terms of fermionic modes, with the understanding that all of the results admit corresponding descriptions in terms of qubits.

Consider FLO circuits acting on even-many fermion modes. For such a system of 2*n* modes, define the set of Majorana operators satisfying the canonical anticommutation relations $\left\{{γ}_{μ}, {γ}_{ν}\right\} = 2 {δ}_{μν} I and {γ}_{μ}^{†} = {γ}_{μ}$ for all *µ*, *v* ∈ [2*n*], where [*n*] is the set of integers {1, ... n}. Denote the associated group of FLO circuits as IF(2*n*). The elements of this group are Gaussian unitaries up to reflection $U : = {γ}_{1}^{x} exp \left({\sum }_{μ , ν} {h}_{μ , ν} {γ}_{μ} {γ}_{ν}\right)$ for *x* ∈ {0,1} and ***h*** a real antisymmetric matrix with elements *h_{µv}.* These preserve linear combinations of Majorana modes under conjugation. Writing 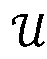 (*A*) ≡ *UAU*^{†} as the unitary conjugation channel by an element $U ∈ F \left(2n\right)$ gives $U \left({γ}_{μ}\right) = {\sum }_{ν = 1}^{2 n} {R}_{μν} {γ}_{ν} .$

For $R = {R}_{1}^{x} {e}^{- 4 h} ∈ O \left(2n\right)$ the single-particle transition matrix and ***R***₁ the canonical reflection with elements (***R***₁)*_{µv} =* -(-1)^{*δ*_{*µ*,1}}*δ_{µv}*. By the canonical anticommutation relations of Equation (3), FLO circuits also preserve fixed-degree polynomials of Majorana operators. For a subset ***α*** ⊆ [2*n*], let *γ_{α}* ≡ Π_{*µ*∈}*_{α}γ_{µ}* denote the *Majorana monomial* labelled by ***α**,* where the order of the product is taken such that the index is ascending from left to right. Equation (4) generalises as $U \left({γ}_{α}\right) = {\sum }_{\left\{β⊆\left[2n\right]\left|\left|β\right|=\left|α\right|\right.\right\}} det \left({R}_{αβ}\right) {γ}_{β}$ where ***R**_{αβ}* denotes the submatrix of ***R*** with rows taken from ***α*** and columns taken from ***β*** (that is, Majorana monomials transform by a *compound* of ***R***)*.* The notational shorthand $α \left|k,l\to \left\{α⊆\left[l\right]\left|\left|α\right|=k\right.\right\}\right.$ will be used herein. Linear transformations of the form in Equation (5) constitute a representation of *O*(2*n*) by the Cauchy-Binet formula, and this representation is irreducible. As explained in [18], FLO transformations are uniquely determined up to an overall phase by their corresponding element of *O*(2*n*)*.* It is convenient to generalize the index-subset notation in Equation (6) to binary strings with a fixed Hamming weight, referring to a binary string by a bold alphabetic character, and, using the same notation as in Equation (6), denote $x \left|k, l\right. \to \left\{\left.x⊆{ℤ}_{2}^{l}\right|\left|x\right|=k\right\}$ *.* In both use cases, the explicit reference to *l* will be dropped where it is clear from context and "***α***|*k*" or "***x***|*k*" will be used.

It will also be helpful to consider these objects in terms of Pauli operators. Denote by $ℙ \left(n\right)$ the n-qubit Pauli group, and let *P*(*n*) denote this group, ( $ℙ \left(n\right)$), modulo an overall phase. Then label an n-qubit Pauli operator (with a convenient choice of phase) by a 2*n*-bit string ***x** =* (***a, b***) as ${σ}_{x} = {i}^{a ⋅ b} {⊗}_{j = 1}^{n} {X}_{j}^{{a}_{j}} {Z}_{j}^{{b}_{j}}$, denoting single-qubit Pauli operators on a fixed site by {*Xⱼ, Yⱼ, Zⱼ*}*.* Since the main concern is with Pauli operators modulo phase, multiplication in *P*(*n*) maps conveniently to mod-2 addition of the associated binary strings in *P*(*n*)*.*

As stated earlier, Majorana monomials and Pauli operators are in one-to-one correspondence (up to a phase) by the Jordan-Wigner transformation $\left\{\begin{matrix}{γ}_{2 j - 1} = {Z}^{⊗ \left(j-1\right)} ⊗ {X}_{j} \\ {γ}_{2 j} = {Z}^{⊗ \left(j-1\right)} ⊗ {Y}_{j}\end{matrix}\right. .$

These operators satisfy the canonical anticommutation relations of Equation (3). In this context, the group of FLO circuits is isomorphic to the group of matchgate circuits, which are denoted as $M \left(n\right)$. Matchgate circuits can be decomposed into 2-qubit matchgates of the form ${G}_{j} \left(A, B\right) : = \left(\begin{matrix}{a}_{00} & 0 & 0 & {a}_{01} \\ 0 & {b}_{00} & {b}_{01} & 0 \\ 0 & {b}_{10} & {b}_{11} & 0 \\ {a}_{10} & 0 & 0 & {a}_{11}\end{matrix}\right)$ on nearest-neighbour qubits {*j, j* + 1} on a 1-d line. Namely, *A* acts on the even-parity 2-qubit subspace of these qubits, and *B* on the odd-parity subspace. It is required that det(*A*) = det(*B*) for *Gⱼ*(*A, B*) to be a matchgate. Note that, in particular, single-qubit rotations of the form *e^{iθZⱼ}* are matchgates for all *θ* ∈ [0,2*π*) and all *j* ∈ [n]. Where clear from context, the groups IF(2n) and $M \left(n\right)$ may be used interchangeably. For example, *U*(*σₓ*) for $U ∈ F \left(2n\right)$ can mean conjugation by the matchgate circuit associated to U under the Jordan-Wigner transformation.

### Kravchuk Matrices

A central object for analysis and one of the specific forms of linear transformation used is the Kravchuk matrix. The Kravchuk matrix of order *l,* denoted by ${M}^{\left(l\right)} ∈ {ℤ}^{\left(l+1\right) \times \left(l+1\right)}$, is an integer-valued matrix whose elements are symmetric polynomials evaluated on ±1. ${M}_{jk}^{\left(l\right)} : = {e}_{k} \left(-{1}_{j}⊕{1}_{l - j}\right) ,$ where *j, k* ∈ [*l*] U {0}, *eₖ(v)* is the degree-k elementary symmetric polynomial in the elements of the array ***v***, and **1***ⱼ* is the length-j vector of all ones.

The Walsh-Hadamard matrix of size 2*n* has matrix elements (-1)*^{x·y}* in the standard basis, where ***x*** and ***y*** are bit-strings of length *n* that label matrix elements. The elements of the Kravchuk matrix are obtained by summing ∑_{(***y***|*k*)}(-1)^{x*·y*} to get a matrix element that depends only on the Hamming weight *k* and the bit-string *x.* In fact, this expression depends only on the Hamming weight of ***x***. By keeping one copy of the resulting sum for each value that |***x***| can take, one obtains the Kravchuk matrix elements in Equation (9).

The Kravchuk matrix plays an analogous role in fermionic ACES as the Walsh-Hadamard matrix does in the original (Clifford) ACES protocol. Namely, it is the essential link between the eigenvalues and error probabilities of a FLO-twirled channel, as explained below.

Presented below are some alternative expressions for M^{(*l*)} which clearly show that this matrix can be computed efficiently. The notation coeff*ₖ* (*p*(*x*)) will be used for the coefficient of the degree-k monomial term of the polynomial *p*(*x*)*,* where the variable *x* will be understood from context. This gives the alternate expressions for ${M}_{jk}^{\left(l\right)}$: $\begin{matrix}{M}_{jk}^{\left(l\right)} & = {coeff}_{k} \left({\left(1-u\right)}^{j}{\left(1+u\right)}^{l - j}\right) & \left(10\right) \\ & = {\sum }_{α \left|k, l\right.} {\left(-1\right)}^{\left|α∩\left[j\right]\right|} & \left(11\right)\end{matrix}$ ${M}_{jk}^{\left(l\right)} = {\sum }_{m = max \left(0,k+j-l\right)}^{min \left(j, k\right)} \left(\begin{matrix}l - j \\ k - m\end{matrix}\right) \left(\begin{matrix}j \\ m\end{matrix}\right) {\left(-1\right)}^{m} .$

Additionally, ***M***^{(*l*)} is proportional to an involution ${\left({M}^{\left(l\right)}\right)}^{2} = {2}^{l} I .$

To validate these equations, note that Equation (10) follows from the definition in Equation (9) and Vieta's formulas. Now consider Equation (11), and let ***b*** := -**1***ⱼ* ⊕ **1**_{*l*-*j*} from the definition in Equation (9). This gives $\begin{matrix}{e}_{k} \left(-{1}_{j}⊕{1}_{l - j}\right) & = {\sum }_{α \left|k, l\right.} {\prod }_{g ∈ α} {b}_{g} & \left(14\right) \\ & = {\sum }_{α \left|k, l\right.} \left({\prod }_{g ∈ α ∩ \left[j\right]} {b}_{g}\right) \left({\prod }_{g ∈ α \ \left[j\right]} {b}_{g}\right) & \left(15\right) \\ & = {\sum }_{α \left|k, l\right.} {\left(-1\right)}^{\left|α∩\left[j\right]\right|} , & \left(16\right)\end{matrix}$ yielding the result of Equation (11).

To show Equation (12), expand the polynomial in the right side of Equation (10) by the binomial theorem $\begin{matrix}{\left(1+u\right)}^{l - j} {\left(1-u\right)}^{j} & = \left[{\sum }_{m = 0}^{l - j} \left(\begin{matrix}l - j \\ m\end{matrix}\right) {u}^{m}\right] \left[{\sum }_{m = 0}^{j} \left(\begin{matrix}j \\ m\end{matrix}\right) {\left(-u\right)}^{m}\right] & \left(17\right) \\ & = {\sum }_{k = 0}^{l} \left[{\sum }_{m = max \left(0,k+j-l\right)}^{min \left(j, k\right)} \left(\begin{matrix}l - j \\ k - m\end{matrix}\right) \left(\begin{matrix}j \\ m\end{matrix}\right) {\left(-1\right)}^{m}\right] {u}^{k} . & \left(18\right)\end{matrix}$

The limits of the sum are such that the binomial coefficients are well-defined (this is redundant since the convention presented herein is such that the binomial coefficients are zero if the arguments are outside of the bounds). The lower limit is such that m ≥ 0 to satisfy the lower bound of $\left(\begin{matrix}j \\ m\end{matrix}\right)$ and *k - m* ≤ *l - j* to satisfy the upper bound of $\left(\begin{matrix}l - j \\ k - m\end{matrix}\right)$. The upper bound is such that m ≤ *j* to satisfy the upper bound of $\left(\begin{matrix}j \\ m\end{matrix}\right)$ and *m* ≤ *k* to satisfy the lower bound of $\left(\begin{matrix}l - j \\ k - m\end{matrix}\right)$. Equation (18), together with Equation (10), gives the result.

To show Equation (13), let *vⱼ*(*u*) ≡ *u^{j}* for *j* ∈ {0} ∪ [*l*]. Again by Equation (9) and Vieta's formulae: ${\left[{M}^{\left(l\right)}⋅v\left(u\right)\right]}_{j} = {\left(1+u\right)}^{l - j} {\left(1-u\right)}^{j}$ ${M}^{\left(l\right)} ⋅ v \left(u\right) = {\left(1+u\right)}^{l} v \left(\frac{1 - u}{1 + u}\right) .$

This gives $\begin{matrix}{\left({M}^{\left(l\right)}\right)}^{2} ⋅ v \left(u\right) = {\left(1+u\right)}^{l} {M}^{\left(l\right)} ⋅ v \left(\frac{1 - u}{1 + u}\right) & \left(21\right) \\ = {\left(1+u\right)}^{l} {\left[1+\left(\frac{1 - u}{1 + u}\right)\right]}^{l} v \left[\frac{1 - \left(\frac{1 - u}{1 + u}\right)}{1 + \left(\frac{1 - u}{1 + u}\right)}\right] & \left(22\right) \\ = {\left[\left(1+u\right)+\left(1-u\right)\right]}^{l} v \left[\frac{\left(1+u\right) - \left(1-u\right)}{\left(1+u\right) + \left(1-u\right)}\right] & \left(23\right) \\ = {2}^{l} v \left(u\right) . & \left(24\right)\end{matrix}$

The set of vectors ${\left\{v\left(u\right)\right\}}_{u ∈ ℂ}$ form a spanning set for ${ℂ}^{l + 1}$, so therefore ${\left({M}^{\left(l\right)}\right)}^{2} = {2}^{l} I .$

While a proof of the above relations can be found in existing literature, it is included here in the interest of clarity and sufficiency. Where clear from context, the label *l* will be dropped from the Kravchuk matrix and any related matrices. In some cases, the phases that accumulate from commuting Majorana operators past one another will need to be accounted for. To this end, it is convenient to define a relative of the Kravchuk matrix as the following "antipode involution".

The antipode involution matrix ***s***^{(l)} for *l* even, is the permutation matrix with components ${s}_{jk}^{\left(l\right)} = {δ}_{jk} {δ}_{j \left(mod 2\right) , 0} + {δ}_{l - j , k} {δ}_{j \left(mod 2\right) , 1} ,$ which takes indices with fixed odd weight and exchanges *j* ↔ *l - j.* It satisfies the following Kravchuk-antipode relations, due to the particular symmetry properties of ***M*:** ${\left({s}^{\left(l\right)}⋅{M}^{\left(l\right)}\right)}_{jk} = {\left({M}^{\left(l\right)}⋅{s}^{\left(l\right)}\right)}_{jk} = {\left(-1\right)}^{jk} {e}_{k} \left(-{1}_{j}⊕{1}_{l - j}\right) .$

The identity of Equation (27) can be proved by showing that both matrix orderings have the components given by the expression on the right-hand side. First, note that: ${\left({s}^{\left(l\right)}⋅{M}^{\left(l\right)}\right)}_{jk} = \left\{\begin{matrix}{M}_{j , k}^{\left(l\right)} & j even \\ {M}_{l - j , k}^{\left(l\right)} & j odd\end{matrix}\right. .$

Since exchanging rows *j* and *l - j* in ***M***^{(*l*)} is equivalent to multiplying the argument of the symmetric polynomial in Equation (9) by a factor of -1, giving ${\left({s}^{\left(l\right)}⋅{M}^{\left(l\right)}\right)}_{jk} = {e}_{k} \left[{\left(-1\right)}^{j}\left(-{1}_{j}⊕{1}_{l - j}\right)\right]$ ${\left({s}^{\left(l\right)}⋅{M}^{\left(l\right)}\right)}_{jk} = {\left(-1\right)}^{jk} {e}_{k} \left(-{1}_{j}⊕{1}_{l - j}\right) ,$ where the second equality follows from the identity *eₖ*(-***v***) *=* (-1)*^{k}eₖ*(***v***). To show the result for the other ordering, utilise the *reciprocal polynomial* of *p*(*x*)*,* given by $p * \left(x\right) = {x}^{d} p \left(\frac{1}{x}\right)$, where d is the degree of *p*. In particular, the degree-k coefficient of *p* is the degree-(*d* - *k*) coefficient of *p**. For any *k*, the alternate expressions for ${M}_{jk}^{\left(l\right)}$ above may be written $\begin{matrix}{M}_{j , l - k}^{\left(l\right)} & = {coeff}_{l - k} \left({\left(1-u\right)}^{j}{\left(1+u\right)}^{l - j}\right) & \left(31\right) \\ & = {coeff}_{k} \left({u}^{l}{\left(1-\frac{1}{u}\right)}^{j}{\left(1+\frac{1}{u}\right)}^{l - j}\right) & \left(32\right) \\ & = {coeff}_{k} \left({\left(u-1\right)}^{j}{\left(u+1\right)}^{l - j}\right) & \left(33\right) \\ & = {\left(-1\right)}^{j} {M}_{j , k}^{\left(l\right)} . & \left(34\right)\end{matrix}$

Since ***s***^{(*l*)} only exchanges columns *k* and *l - k* in ***M***^{(*l*)} if *k* is odd, this gives ${\left({M}^{\left(l\right)}⋅{s}^{\left(l\right)}\right)}_{jk} = {\left(-1\right)}^{jk} {M}_{jk} = {\left(-1\right)}^{jk} {e}_{k} \left(-{1}_{j}⊕{1}_{l - j}\right) .$

Together, Equations (30) and (35) give the result of Equation (27).

Finally, the diagonal matrix of binomial coefficients ***d***^{(*l*)} can be defined as ${d}_{jk}^{\left(l\right)} = \left(\begin{matrix}l \\ k\end{matrix}\right) {δ}_{jk} .$

It is straightforward to see that ***s***^{(*l*)} and ***d***^{(*l*)} commute as well, but ***M***^{(*l*)} and ***d***^{(*l*)} do not commute. Each of these transformations is used in the estimation procedure.

### Noise Channels and Twirling

A quantum noise channel is described by a completely positive, trace-preserving (CPTP) map, admitting a Kraus representation $E \left(X\right) = {\sum }_{j} {K}_{j} {XK}_{j}^{†} ,$ where {*Kⱼ*} are the Kraus operators satisfying ${\sum }_{j} {K}_{j}^{†} {K}_{j} = I .$

For a unitary ensemble (either discrete or continuous), define the 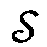 -twirling of *ε* as 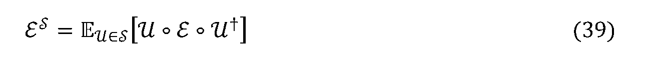 where the unitary channel notation is employed as above, and ${E}_{x} \left[f\left(x\right)\right]$ denotes the expectation value over *x* of *f*(*x*)*.* The main examples to consider are Pauli and FLO twirling, where the expectation is given respectively by ${E}^{ℙ \left(n\right)} \left(X\right) = {4}^{- n} {\sum }_{x ∈ ℙ \left(n\right)} {\sum }_{j} \left({σ}_{x}{K}_{j}{σ}_{x}\right) X {\left({σ}_{x}{K}_{j}{σ}_{x}\right)}^{†} ,$ and ${E}^{F \left(2n\right)} \left(X\right) = {\int }_{U ∈ F \left(2n\right)} dU {\sum }_{j} U \left({K}_{j}\right) XU {\left({K}_{j}\right)}^{†}$ where Equation (41) is a Haar average over the group of FLO unitaries. Note also that twirling is idempotent. That is, twirling twice is the same as twirling once. Additionally, 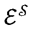 commutes with every element of 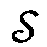 when 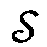 is a group, by construction.

A channel that is invariant under Pauli twirling is called a Pauli channel. It can be shown that Pauli-twirling a general channel results in a Pauli channel [20, Lemma 5.2.4]. Pauli channels can be parameterized as ${E}^{ℙ \left(n\right)} \left(X\right) = {\sum }_{x ∈ ℙ \left(n\right)} {p}_{x} {σ}_{x} {Xσ}_{x}$ where the ${\left\{{p}_{x}\right\}}_{x ∈ ℙ \left(n\right)}$ form a probability distribution over bit-strings of length 2*n*. These are called the Pauli error probabilities. Starting from a general channel with Kraus operators *Kⱼ* ≡ Σ*ⱼ c_{j**x**}σ**ₓ*** as in Equation (37), the relationship to the Pauli error probabilities of the twirled channel in Equation (42) is [20, Lemma 5.2.4] ${p}_{x} = {\sum }_{j} {\left|{c}_{j x}\right|}^{2} .$

Similarly, a FLO-twirled channel is one that is invariant under FLO twirling. Since all Pauli operators are matchgates, any FLO-twirled channel is also invariant under Pauli twirling, and is therefore a Pauli channel. Note the following contrast between Pauli twirling and FLO twirling: Pauli twirling a unitary Pauli (i.e. rank-1) channel leaves that channel invariant, but it is not the case that FLO unitary channels are invariant under FLO twirling since they generally become non-unitary after twirling. FLO-twirled channels on 2n modes can be parameterized as ${E}^{F \left(2n\right)} \left(X\right) = {\sum }_{k = 0}^{2 n} {\left(\begin{matrix}2 n \\ k\end{matrix}\right)}^{- 1} {q}_{k} {\sum }_{\left(α\left|k,2n\right.\right)} {γ}_{α} {Xγ}_{α}^{†} ,$ where *qₖ* form a probability distribution over {0, ... ,2*n*}. *qₖ* will be referred to as the *fermionic error probabilities.*

To formulate the FLO twirl of a Pauli channel, consider a Pauli channel ${ε}^{ℙ \left(n\right)}$ with Pauli error probabilities *p**ₓ***. Let ***x***(***α***) denote the Pauli string associated to the subset of Majorana mode ***α*** by the Jordan-Wigner transformation. Then ${ε}^{F \left(2n\right)} = {\left({ε}^{ℙ \left(n\right)}\right)}^{F \left(2n\right)} ,$ and the fermionic error probabilities *qₖ* of ${ε}^{F \left(2n\right)}$ are given by: ${q}_{k} = {\sum }_{α \left|k\right.} {p}_{x} \left(α\right) .$

Equation (45) follows from the fact that every Pauli operator is also a FLO unitary by the Jordan-Wigner transformation. Namely, for all ***α*** ⊆ [2*n*] with |***α***| = *L*: ${γ}_{α} = \left\{\begin{matrix}{\prod }_{j = 1}^{\frac{L}{2}} \left({γ}_{{α}_{2 j - 1}}{γ}_{{α}_{2 j}}\right) & L even \\ {γ}_{1} \left({γ}_{1}{γ}_{{α}_{1}}\right) {\prod }_{j = 1}^{\frac{L - 1}{2}} \left({γ}_{{α}_{2 j}}{γ}_{{α}_{2 j + 1}}\right) & L odd\end{matrix}\right. .$

Each factor in parentheses is a FLO transformation, since ${γ}_{j} {γ}_{k} = exp \left(\frac{π}{2}{γ}_{j}{γ}_{k}\right)$, and ${γ}_{1} ∈ F \left(2n\right)$ by the definition below Equation (3). Thus, the FLO twirl can be performed on *ε* by first performing a Pauli twirl, mapping $ε \to {ε}^{ℙ \left(n\right)}$, and then twirling over the full group of FLO unitary transformation, mapping ${ε}^{ℙ \left(n\right)} \to {\left({ε}^{ℙ \left(n\right)}\right)}^{F \left(2n\right)} = {ε}^{F \left(2n\right)}$.

Applying the Jordan-Wigner transform to Equation (42), together with Equation (45) gives $\begin{matrix}{ε}^{F \left(2n\right)} \left(X\right) & = {\sum }_{α ⊆ \left[2n\right]} {p}_{x} \left(α\right) {\int }_{F \left(2n\right)} dUU \left({γ}_{α}\right) XU \left({γ}_{α}^{†}\right) & \left(48\right) \\ & \begin{matrix}= {\sum }_{α ⊆ \left[2n\right]} {p}_{x} \left(α\right) \left[{\int }_{O \left(2n\right)} d R det \left({R}_{αβ}\right) det \left({R}_{αη}\right)\right] \left({γ}_{β}{Xγ}_{η}^{†}\right) . \\ \left.β, η\right| \left|α\right| , 2 n\end{matrix} & \left(49\right)\end{matrix}$

Since ${ε}^{F \left(2n\right)}$ is invariant under Pauli twirling (again by the argument that every Pauli is a matchgate), it must be that only the terms for which ***β*** = ***η*** are nonvanishing. This gives ${ε}^{F \left(2n\right)} \left(X\right) = {\sum }_{\begin{matrix}α ⊆ \left[2n\right] \\ \left.β\right| \left|α\right| , 2 n\end{matrix}} {p}_{x} \left(α\right) \left[{\int }_{O \left(2n\right)} d R {\left|det\left({R}_{αβ}\right)\right|}^{2}\right] \left({γ}_{β}{Xγ}_{β}^{†}\right) .$

Below, ⊙ denotes the argument to ${ε}^{F \left(2n\right)}$. To evaluate this integral, note that it is invariant upon making the change of variables ***R*** → ***S**^{T}**R**,* where ***S*** is a permutation matrix which maps *α* to some subset ***η*** with |***η***| = |***α***|, as $\begin{matrix}{\int }_{O \left(2n\right)} d R {\left|det\left({R}_{αβ}\right)\right|}^{2} = {\int }_{O \left(2n\right)} d R {\left|det\left[{\left({S}^{T}R\right)}_{αβ}\right]\right|}^{2} \left(51\right) \\ = {\int }_{O \left(2n\right)} d R {\left|det\left({R}_{ηβ}\right)\right|}^{2} \left(52\right)\end{matrix}$

In this step, the Cauchy-Binet formula and the fact that det[(***S**^{T}*)*_{αβ}*] *=* ±*δ_{ξ**η**}* are used. Summing over all such ***η*** gives $\begin{matrix}{\int }_{O \left(2n\right)} d R {\left|det\left({R}_{αβ}\right)\right|}^{2} = {\left(\begin{matrix}2 n \\ \left|α\right|\end{matrix}\right)}^{- 1} {\sum }_{\left.η\right| \left|α\right|} {\int }_{O \left(2n\right)} d R {\left|det\left({R}_{ηβ}\right)\right|}^{2} \left(53\right) \\ = {\left(\begin{matrix}2 n \\ \left|α\right|\end{matrix}\right)}^{- 1} {\int }_{O \left(2n\right)} d R det \left[{\left({R}^{T}R\right)}_{ββ}\right] \left(54\right) \\ = {\left(\begin{matrix}2 n \\ \left|α\right|\end{matrix}\right)}^{- 1} . \left(55\right)\end{matrix}$

The first to the second equality follows from the fact that $det \left({R}_{ηβ}\right) = det \left({R}_{βη}^{T}\right)$*\* in one of the factors, and again the Cauchy-Binet formula is used. Finally, the determinant is elevated to 1 and the Haar integral is normalized. This gives $\begin{matrix}{ε}^{F \left(2n\right)} = {\sum }_{\begin{matrix}α ⊆ \left[2n\right] \\ \left.β\right| \left|α\right|\end{matrix}} {\left(\begin{matrix}2 n \\ \left|α\right|\end{matrix}\right)}^{- 1} {p}_{x} \left(α\right) \left({γ}_{β}⊙{γ}_{β}^{†}\right) \left(56\right) \\ = {\sum }_{k = 0}^{2 n} {\left(\begin{matrix}2 n \\ k\end{matrix}\right)}^{- 1} \left({\sum }_{α \left|k\right.} {p}_{x} \left(α\right)\right) \left({\sum }_{β \left|k\right.} {γ}_{β} ⊙ {γ}_{β}^{†}\right) . \left(57\right)\end{matrix}$

Identifying *qₖ =* ∑_{*α*|}*ₖ pₓ*(***α***) gives Equation (46).

The FLO twirl of a general channel has fermionic error probabilities that are related to the Kraus operators by concatenating the expressions in Equation (43) and Equation (46).

A noisy implementation 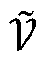 of a FLO unitary 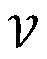 is modelled as a noise map *ε* followed by the ideal channel 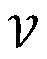 , with the intuition that *ε* is close to the identity channel. This provides the following definition of *unitary channel noise.*

For a noisy implementation 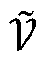 of a unitary conjugation channel 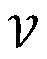 , define the noise map corresponding to by: $ε : = {v}^{†} {v}^{˜} ,$ and this gives = *ε*, since is unitary.

Eventually it will be required that the noise map *ε*, so defined, is not too noisy in a sense made precise later, when defining the model assumptions. Prepending a random FLO unitary 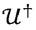 to 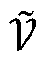 and appending the unitary 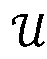 conjugated by V gives the twirled noise map followed by the ideal channel in expectation. For 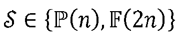 , the following result on noise twirling: 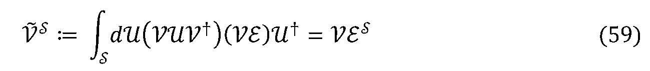 is given, which can be seen from the definition of twirling described by Equations (39), (40) and (41) above.

In practice, twirling is done by taking a sample average over the ensemble of unitary circuits appearing in the twirl [4,5]. In the Pauli-twirl case, the overhead that this induces is negligible in the sense that the depth-one Pauli unitary circuits only slightly increase the depth overall, or can often be compiled into the underlying quantum circuit [5]. However, the best-known implementations of a generic FLO circuit require *O*(*n*) depth [21].

### Channel Eigenvalues

If ${ε}^{ℙ \left(n\right)}$ is a Pauli channel, then ${ε}^{ℙ \left(n\right)}$ satisfies an eigenvector relation with respect to the Pauli operators ${ε}^{ℙ \left(n\right)} \left({σ}_{x}\right) = {λ}_{x} {σ}_{x} .$

The *λₓ* are called the *Pauli channel eigenvalues.* They are related to the Pauli error probabilities by ${λ}_{x} = {\sum }_{y ∈ ℙ \left(n\right)} {\left(-1\right)}^{\left〈x, y\right〉} {p}_{y}$ where 〈***x,y***〉 is the symplectic inner product between bit strings ***x, y*** ∈ {0,1}^{×2*n*}. Up to a column permutation, this is the Walsh-Hadamard transformation.

Now let ${ε}^{F \left(2n\right)}$ be a FLO-twirled channel. Then there is a similar eigenvalue relationship where the eigenvectors are Majorana monomials. From the parameterization in Equation (44), one can derive the eigenvalue relation ${ε}^{F \left(2n\right)} \left({γ}_{β}\right) = {\sum }_{k = 0}^{2 n} {\left(\begin{matrix}2 n \\ k\end{matrix}\right)}^{- 1} {q}_{k} \left({\sum }_{α \left|k\right.} {γ}_{α}^{†} {γ}_{β} {γ}_{α}\right) = \left\{{\sum }_{k = 0}^{2 n} \left[{\sum }_{α \left|k\right.} {\left(-1\right)}^{\left|β\right| k + \left|α∩β\right|}\right] {\left(\begin{matrix}2 n \\ k\end{matrix}\right)}^{- 1} {q}_{k}\right\} {γ}_{β} .$

The coefficient in braces can be simplified using the alternate forms of the Kravchuk matrix and the involution properties of Equations (10) to (13) and the subsequent identities to give the *FLO-twirled channel eigenvalue* $\begin{matrix}{ξ}_{j} = {\sum }_{k = 0}^{2 n} {\left(-1\right)}^{jk} {e}_{k} \left(-{1}_{j}⊕{1}_{2 n - j}\right) {\left(\begin{matrix}2 n \\ k\end{matrix}\right)}^{- 1} {q}_{k} \\ = {\left[\left(s⋅M⋅{d}^{- 1}\right)⋅q\right]}_{j} .\end{matrix}$

This constitutes a proof of the following result for FLO-twirled channel eigenvalues: $ξ = \left(s⋅M⋅{d}^{- 1}\right) ⋅ q ,$ which can immediately be seen as the vector generalisation of Equation (63).

As ${2}^{- \frac{l}{2}} \left[{s}^{\left(l\right)}⋅{M}^{\left(l\right)}\right]$ is an involution, this relationship can be inverted and expressed as the probabilities q from Equation (64) in terms of the eigenvalues ***ξ*** as $q = {4}^{- n} \left(d⋅M⋅s\right) ⋅ ξ .$

Owing to this linear relation, the method can learn either ***q*** or ***ξ*** to completely characterize a FLO-twirled channel, but one must be careful about the precision in these different cases due to the relative normalization.

A FLO-twirled channel commutes with every element of the group $F \left(2n\right)$, so the notion of a channel eigenvalue can be extended to quantum circuits as ${{U}^{˜}}^{F \left(2n\right)} : = {\prod }_{g} \left({{U}^{˜}}_{g}{ε}_{g}^{F \left(2n\right)}\right) = \left({\prod }_{g} {U}_{g}\right) \left({\prod }_{g} {ε}_{g}^{F \left(2n\right)}\right)$ where *ξ_{g,k}* is the degree-*k gate eigenvalue* for the quantum circuit factor *g*. Define the product in parentheses as the degree-k circuit eigenvalue for ${{U}^{˜}}^{F \left(2n\right)}$ as ${Λ}_{k} : = {\prod }_{g} {ξ}_{g , k} .$

### Measurement Protocol

Efficiently estimating noise in a quantum system requires that models are fitted with certain simplifying assumptions. Following from Equation (58) and the subsequent identity 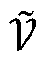 = 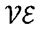 , assume the parameters describing the noise channel *ε* are independent of time and, furthermore, depend only on the gate that is applied. This is similar to the time-stationary and Markovian assumptions of [23, Definition 2], but unlike Ref. [23], and much related literature, the method presented herein allows wide latitude for gate dependence. In that regard the present protocol can be viewed as a kind of "fermionic gate-set tomography" in the FLO-twirled subspace [6-8, 24].

A map that takes ideal physical operations-state preparations, unitary gate operations, and measurements-to their parameterized noisy versions will broadly be referred to as a *model* (and the FACES model given in Equation 1 is viewed as a special case of this). Denote the set of idealized physical operations by 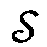 and the set of noisy operations by 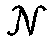 *,* then the model is a bijective map *ϕ*: 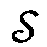 → 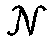 .

Only quantum circuits composed of gates for which the model is defined will be considered, defining the *realizable* setting. If the "true" noise belongs to the realizable setting, then the method provides convergence/correctness guarantees that one can learn that model. Otherwise, one of the assumptions is violated. Below, some refining assumptions about the model are presented, as well as presenting the specific considerations for the FLO setting, details of the FACES protocol and an analysis of the sample complexity required to bound the error on the noise estimator *ξ̂*. Following this, a discussion of numerical results and pseudo code algorithms before concluding with a specific example implementation of the FACES protocol will be presented.

### Model Assumptions

Denote a noisy quantum circuit by ${U}^{˜} = {\prod }_{g = 1}^{L} {{U}^{˜}}_{g}$*,* where each noisy gate factor is given by 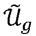 := 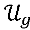 *ε_{g}* as in Equation 58, extended to a quantum circuit of length *L* as in Equation (66). The ideal part 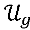 of each noisy gate is known from the physical operation applied, but the accompanying noise channel *ε_{g}* contains free parameters to be learned. In principle, this definition allows for the case where there are multiple ways of physically implementing the same idealized quantum circuit, resulting in multiple quantum circuits with the same ideal part but possibly distinct accompanying noise channels. As stated above, the method considers the setting where the applied noise channel is unique to the corresponding idealized gate (that is, the model *ϕ* is bijective), but it is straightforward to relax this assumption. In addition, the noisy part of each gate may also depend on the idealized gate itself. Under these assumptions, the FACES model given in Equation 1 is a special case of the general model described in this section where each individual FLO unitary gate is associated to its FLO-twirled noisy version through its collection of gate eigenvalues. In summary, it is assumed that any noise model to learn is Markovian, or approximately Markovian in at least two senses: first, that it can be described by a completely positive trace-preserving map, but also that the noise specific to a given gate depends only on the idealized gate itself.

In principle, the twirling gates 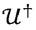 and 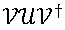 in equation (59) are noisy in the FLO-twirling case as well, but we assume that this noise is only weakly correlated with 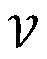 , since we can implement them without necessarily implementing 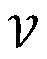 due to the FLO group structure. Our expectation is that, in practice, this noise will introduce some additional uncertainty on the gate-eigenvalue estimates.

The demonstrations of FACES presented herein are applied to quantum computations encoded as matchgate operations, such as those whose fundamental degrees of freedom are bosons or qudits (*d*-level quantum systems for *d* larger than 2). Additionally, as presented, the FACES protocol assumes that the true noise is not too strong in that the true noise parameters to learn must be lower bounded by a constant. Finally, FACES additionally requires that the noise is Markovian and time stationary, so that it falls within a class of noise models that are described by a learnable parameterization. In general, the algorithm therefore requires that other error mitigation or correction techniques have been used to guarantee the noise satisfies these assumptions.

The state preparations and measurements (SPAM) are required to not be too noisy so that useful information can be obtained from experiments. Specifically, define *ρ̃ₓ* to be the density matrix describing a noisy preparation of the computational basis state |***x***〉〈***x***|*.* Similarly, let *Ẽₓ* correspond to the noisy POVM element associated to measuring the computational basis state |***x***〉〈***x***|*.* A first assumption is that SPAM errors are sufficiently weak, as quantified by the following inequality, $\left〈0\right| {{ρ}^{˜}}_{0} \left|0\right〉 \left〈x\right| {{E}^{˜}}_{x} \left|x\right〉 \geq 1 - c$ for some sufficiently small constant *c, say c* ≤ 1/3. The noise channels *ε* considered should be also such that their FLO-twirled versions are not too noisy, otherwise they will be hard to learn. This may be written as ${\left‖J-{ε}_{j}^{F \left(2n\right)}\right‖}_{∞} \leq c ′$ for all noise channels *εⱼ* that the method will learn. Here again, *c'* is a sufficiently small constant. Since the channels are always diagonal in the Pauli Basis, this is equivalent to requiring that any noisy-channel eigenvalue lies in the interval [1 *- c',* 1] (in the proof of Equation 118, it may be required that *c'* = 1/2). In practice, one routinely expects that these numbers *c, c'* are less than 0.05 or even 0.01 in some quantum architectures, so these are not strong assumptions.

### FLO-Specific Considerations

A fundamental challenge attendant to the setting of noisy FLO circuits arises due to the fact that the group $F \left(2n\right)$ is continuous. Since the method can only ever estimate finitely many noise parameters, it is therefore assumed that the noise can nonetheless be described by a finite set of channels. For completeness, choose a particular gate set given by *G*: = {*e^{iθZⱼ}*}_{*j*,*θ*} ∪ {*Gⱼ*(*H, H*)}*ⱼ* in the qubit picture, where *θ* ∈ [0,2*π*) is allowed to be an arbitrary continuous parameter for each *j.* The matrix *H* is the single-qubit Hadamard operator, and *Gⱼ*(*A,B*) is the 2-qubit matchgate as given in Equation (8). While the 2-qubit gates {*Gⱼ*(*H, H*)}*,* form a discrete set, the single qubit rotations {*e^{iθZⱼ}*}*_{j,θ}* do not. Then, partition the interval [0,2π) into *N* bins of the form ${B}_{k} : = \left[\frac{2 π \left(k-1\right)}{N}, \frac{2 πk}{N}\right)$

for *k* ∈ [*N*]*,* and assume that the single-qubit rotation *e^{iθZⱼ}* is subject to a fixed noise channel *ε*_{1*,jk*} if *θ* ∈ *Bₖ.* Similarly, assume that each of the {*Gⱼ*(*H*, *H*)}*ⱼ* is subject to a fixed noise channel *ε*_{2,*j*}. An interesting and related question is whether one can use these methods to learn a finite set of *noise generators* for a continuous family of noise operations. This question will be returned to later in this document.

Finally, some practical details related to twirling over the FLO group will now be reviewed. Importantly, FLO twirling cannot generally be made to be constant depth. One way to see this is to note that, in the qubit picture, matchgate twirling averages together the error probabilities of local Paulis with those of arbitrarily high weight (e.g. *X*₁ and *Z*^{*⊗*(*n-*1)}*Yₙ*). Thus, any FLO unitary ensemble used to apply the twirling must involve at least one deep quantum circuit if the gates are required to have constant support. These points will again be returned to in the discussion at the end of this document.

### Protocol Details

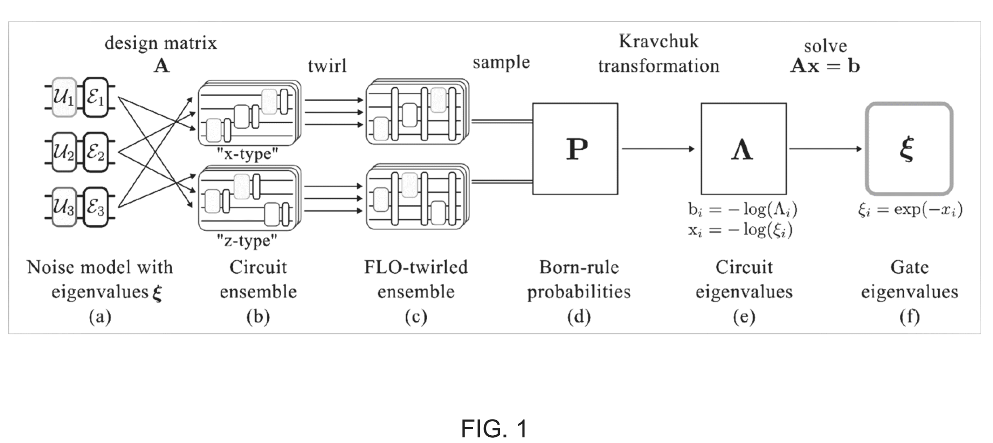

The measurement protocol for obtaining FLO-averaged circuit eigenvalues has similarities to the aforementioned ACES protocol of Ref. [9], which is detailed graphically in FIG. 1.

FIG. 1 depicts a graphical outline of an embodiment of the FACES protocol. Given a set of noisy gates { 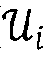 *εᵢ*}*ᵢ* at step (a) to be characterized, the method models each such gate as the associated noise channel *εᵢ*, followed by an application of the ideal gate 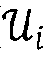 *.* Step (b) composes the gates into a collection of quantum circuits according to the design matrix ***A.*** At step (c), for each quantum circuit *Cⱼ* ∈ 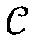 in the collection, the method randomly samples from an ensemble of quantum circuits whose average is *Cⱼ*, subject to matchgate-twirled noise. Step (d) samples from the quantum circuits in the collection to obtain an estimate for the Born-rule probabilities of the associated outcomes. Step (e) applies a Kravchuk transformation to obtain the eigenvalues of each quantum circuit. Finally, at step (f), the gate eigenvalues are fitted to the data using a log-linear model.

To learn all the eigenvalues of a FLO-twirled noise channel, presented herein are two complementary protocols, which differ slightly in the required input state, measurement basis, and net FLO circuit applied. An important unitary conjugation channel in the analysis is ${U}_{+} \left(X\right) = {U}_{+} {XU}_{+}^{†} ,$ related to the unitary *U*(*R*₊), as defined in [18], and satisfying ${U}_{+} \left(\left|+\right〉; {\left〈+\right|}^{⊗ n}\right) = \left(\frac{I + {iγ}_{1}}{\sqrt{2}}\right) \left|0\right〉 \left〈0\right| \left(\frac{I - {iγ}_{1}}{\sqrt{2}}\right) .$

The following decomposition in terms of the gate set from the previous section is given as ${U}_{+} = {e}^{- \frac{iπ}{4} {Z}_{1}} {\prod }_{j = 1}^{n - 1} \left[{e}^{- \frac{iπ}{4} {Z}_{j + 1}}{G}_{j}\left(H, H\right){e}^{\frac{iπ}{4} {Z}_{j}}{G}_{j}\left(H, H\right){e}^{\frac{iπ}{4} {Z}_{j + 1}}\right]$ up to an overall phase, where the product is taken in ascending order in *j* from left to right.

In general, an ensemble of noisy FLO circuits will be labelled as 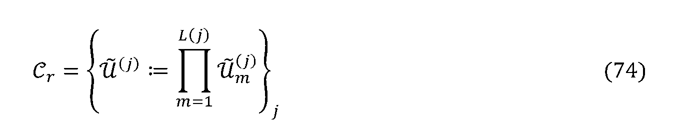 where *r* ∈ {*"x", "z"*}*,* and the net ideal unitary varies with r as follows: for all 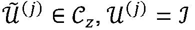 (the identity channel), and for all 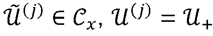 *.* Recall that a tilde is used to indicate the noisy version of a gate or quantum circuit. To avoid complicated superscript notation, 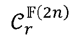 will denote the ensemble whose elements correspond to the FLO-twirled elements of 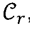 , and the explicit superscript will be dropped on the elements of 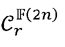 themselves, with the understanding that they are twirled.

The quantum circuits can be organised into two cases depending on whether the first qubit is prepared in the *x* or z basis, called "type-*x*" and "type-*z*", respectively. The readout data, and thus the expected signal, takes two different forms in these two cases. Therefore, the method organizes the empirical estimates of the outcome probabilities according to the quantum circuit (or equivalently, readout) type. Readout data of type-*z* is the Hamming weight of an *n*-bit string, whereas readout data of type-x consists of a sign (±) together with the Hamming weight of an (*n* - 1)-bit string. When this data is collected into empirical probability estimates over the relevant Hamming weights, let ***P*** denote these empirical estimates, regardless of whether the quantum circuit is of *x* or *z* type. Nevertheless, the type can be distinguished by adding an index *s* that takes values in {+, -,0} where 0 indicates z-type data, and ± corresponds to the sign label of *x*-type data. For example, the estimated probability of weight*-*j in a +-outcome *x-*type experiment would be labeled *P*_{+,*j*}, and so on. This is detailed further in the worked example towards the end of the description.

Define the *z*-type Born-rule probability distribution sampled in experiment *j* as ${P}_{0 , l}^{\left(j\right)} : = {\sum }_{\left.w\right| l , n} \left〈w\right| {{U}^{˜}}^{\left(j\right)} \left(\left|0\right〉\left〈0\right|\right) \left|w\right〉$ for 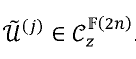 . Similarly, define the x-type Born-rule probability distribution in experiment*j* as ${P}_{\pm , l}^{\left(j\right)} : = {\sum }_{\left.w\right| l , n - 1} \left〈{\pm }_{y}, w\right| {{U}^{˜}}^{\left(j\right)} \left(\left|+\right〉{\left〈+\right|}^{⊗ n}\right) \left|{\pm }_{y}, w\right〉$

Here, the first qubit is measured in the *y*-basis, and the outcome of this measurement corresponds to the ± index on this probability. Let ${P}_{s}^{\left(j\right)}$ be the vector with components ${P}_{s , l}^{\left(j\right)}$ for *s* ∈ {+, -,0}. The Born-rule probability distributions are related to the circuit eigenvalues of a FLO-twirled quantum circuit. Let ${Λ}_{k}^{\left(j\right)}$ denote the degree-*k* eigenvalue of the *j*^{th} quantum circuit in either ensemble 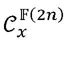 or 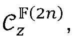 , for *k* ∈ [2*n*]. Collecting these eigenvalues into vectors gives ${Λ}_{even}^{\left(j\right)} : = {\left({Λ}_{2 k}^{\left(j\right)}\right)}_{k = 0}^{n}$ ${Λ}_{even ∖ \left\{2n\right\}}^{\left(j\right)} : = {\left({Λ}_{2 k}^{\left(j\right)}\right)}_{k = 0}^{n - 1}$ ${Λ}_{odd}^{\left(j\right)} : = {\left({Λ}_{2 k + 1}^{\left(j\right)}\right)}_{k = 0}^{n - 1} .$

The relationship between the above circuit eigenvalues and the estimated probability distributions can now be derived for each experiment type (*x* and *z*). Let r denote the specific experiment type. Then, for an ensemble of noisy and FLO-twirled FLO circuits 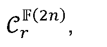 , ${P}_{0}^{\left(j\right)} = {2}^{- n} {d}^{\left(n\right)} ⋅ {M}^{\left(n\right)} ⋅ {Λ}_{even}^{\left(j\right)}$ for r = "z". Similarly, $\frac{1}{2} \left({P}_{+}^{\left(j\right)}+{P}_{-}^{\left(j\right)}\right) = {2}^{- n} {d}^{\left(n-1\right)} ⋅ {M}^{\left(n-1\right)} ⋅ {Λ}_{even ∖ \left\{2n\right\}}^{\left(j\right)}$ $\frac{1}{2} \left({P}_{+}^{\left(j\right)}-{P}_{-}^{\left(j\right)}\right) = {2}^{- n} {d}^{\left(n-1\right)} ⋅ {M}^{\left(n-1\right)} ⋅ {Λ}_{odd}^{\left(j\right)}$ for r = "*x*"*.*

To prove the results of Equations (80), (81) and (82), begin with the statement for 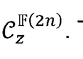 . This gives $\begin{matrix}{{U}^{˜}}^{\left(j\right)} \left(\left|0\right〉\left〈0\right|\right) & = {\prod }_{m = 1}^{L \left(j\right)} {\left({ε}_{m}^{\left(j\right)}\right)}^{F \left(2n\right)} {U}_{m}^{\left(j\right)} \left(\left|0\right〉\left〈0\right|\right) & \left(83\right) \\ & = {2}^{- n} {\sum }_{x ∈ {ℤ}_{2}^{\times n}} {\prod }_{m = 1}^{L \left(j\right)} {\left({ε}_{m}^{\left(j\right)}\right)}^{M \left(n\right)} {U}_{m}^{\left(j\right)} \left({Z}^{x}\right) & \left(84\right)\end{matrix}$ where ${Z}^{x} : = {\prod }_{j = 1}^{n} {Z}_{j}^{{x}_{j}}$*.* Under the Jordan-Wigner transform, ${Z}^{x} = {\prod }_{j = 1}^{n} {\left(-{iγ}_{2 j - 1}{γ}_{2 j}\right)}^{{x}_{j}} .$

Applying the discussion leading to Equation (67) gives ${{U}^{˜}}^{\left(j\right)} \left(\left|0\right〉\left〈0\right|\right) = {2}^{- n} {\sum }_{x ∈ {ℤ}_{2}^{\times n}} {\prod }_{m = 1}^{L \left(j\right)} {ξ}_{m , 2 \left|x\right|}^{\left(j\right)} {U}_{m}^{\left(j\right)} \left({Z}^{x}\right)$ ${{U}^{˜}}^{\left(j\right)} \left({ρ}_{0}\right) = {2}^{- n} {\sum }_{x ∈ {ℤ}_{2}^{\times n}} {Λ}_{2 \left|x\right|}^{\left(j\right)} {U}^{\left(j\right)} \left({Z}^{x}\right) .$

Quantum circuits in 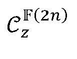 are chosen to interact as the identity on net. This gives ${{U}^{˜}}^{\left(j\right)} \left(\left|0\right〉\left〈0\right|\right) = {2}^{- n} {\sum }_{x ∈ {ℤ}_{2}^{\times n}} {Λ}_{2 \left|x\right|}^{\left(j\right)} \left({Z}^{x}\right)$ and $\begin{matrix}\left〈w\right| {{U}^{˜}}^{\left(j\right)} \left(\left|0\right〉\left〈0\right|\right) \left|w\right〉 & = {2}^{- n} {\sum }_{x ∈ {ℤ}_{2}^{\times n}} {Λ}_{2 \left|x\right|}^{\left(j\right)} \left〈w\right| {Z}^{x} \left|w\right〉 & \left(89\right) \\ & = {2}^{- n} {\sum }_{x ∈ {ℤ}_{2}^{\times n}} {Λ}_{2 \left|x\right|}^{\left(j\right)} {\left(-1\right)}^{x ⋅ w} & \left(90\right) \\ & = {2}^{- n} {\sum }_{k = 0}^{n} {Λ}_{2 k}^{\left(j\right)} {\sum }_{x \left|k\right.} {\left(-1\right)}^{x ⋅ w} & \left(91\right) \\ & = {2}^{- n} {\sum }_{k = 0}^{n} {Λ}_{2 k}^{\left(j\right)} {M}_{\left|w\right| k} . & \left(92\right)\end{matrix}$

Summing over all w with a fixed Hamming weight *l* gives ${\sum }_{w \left|l\right.} \left〈w\right| {{U}^{˜}}^{\left(j\right)} \left(\left|0\right〉\left〈0\right|\right) \left|w\right〉 = {2}^{- n} \left(\begin{matrix}n \\ l\end{matrix}\right) {\sum }_{k = 0}^{n} {M}_{lk} {Λ}_{2 k}^{\left(j\right)}$ which is the desired result. Therefore, ${P}_{0}^{\left(j\right)} = {2}^{- n} {d}^{\left(n\right)} ⋅ {M}^{\left(n\right)} ⋅ {Λ}_{even}^{\left(j\right)} .$

In the 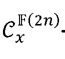 -case, instead of Equation (84), ${{U}^{˜}}^{\left(j\right)} \left(\left|+\right〉{\left〈+\right|}^{⊗ n}\right) = {\prod }_{m = 1}^{L \left(j\right)} {\left({ε}_{m}^{\left(j\right)}\right)}^{F \left(2n\right)} {U}_{m}^{\left(j\right)} \left(\left|+\right〉{\left〈+\right|}^{⊗ n}\right) .$

As shown in [18], there exists a FLO unitary 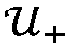 effecting ${U}_{+} \left(\left|+\right〉{\left〈+\right|}^{⊗ n}\right) = \left(\frac{I + {iγ}_{1}}{\sqrt{2}}\right) \left|0\right〉 \left〈0\right| \left(\frac{I - {iγ}_{1}}{\sqrt{2}}\right) .$

This gives $\begin{matrix}{{U}^{˜}}^{\left(j\right)} \left(\left|+\right〉{\left〈+\right|}^{⊗ n}\right) & = {\prod }_{m = 1}^{L \left(j\right)} {\left({ε}_{m}^{\left(j\right)}\right)}^{F \left(2n\right)} {U}_{m}^{\left(j\right)} \left\{{U}_{+}^{†}\left[\left(\frac{I + {iγ}_{1}}{\sqrt{2}}\right)\left|0\right〉\left〈0\right|\left(\frac{I - {iγ}_{1}}{\sqrt{2}}\right)\right]\right\} & \left(97\right) \\ & = {2}^{- n} {\sum }_{x ∈ {ℤ}_{2}^{\times n}} {\prod }_{m = 1}^{L \left(j\right)} {\left({ε}_{m}^{\left(j\right)}\right)}^{F \left(2n\right)} {U}_{m}^{\left(j\right)} \left\{{U}_{+}^{†}\left[\left(\frac{I + {iγ}_{1}}{\sqrt{2}}\right){Z}^{x}\left(\frac{I - {iγ}_{1}}{\sqrt{2}}\right)\right]\right\} & \left(98\right) \\ & = {2}^{- n} {\sum }_{x ∈ {ℤ}_{2}^{\times n}} {\prod }_{m = 1}^{L \left(j\right)} {\left({ε}_{m}^{\left(j\right)}\right)}^{F \left(2n\right)} {U}_{m}^{\left(j\right)} \left\{{U}_{+}^{†}\left[{\left({iγ}_{1}\right)}^{{x}_{1}}{Z}^{x}\right]\right\} & \left(99\right) \\ & = {2}^{- n} {\sum }_{x ∈ {ℤ}_{2}^{\times n}} {\prod }_{m = 1}^{L \left(j\right)} {ε}_{m , 2 \left|x\right| - {x}_{1}}^{\left(j\right)} {U}_{m}^{\left(j\right)} \left\{{U}_{+}^{†}\left[{\left({iγ}_{1}\right)}^{{x}_{1}}{Z}^{x}\right]\right\} & \left(100\right) \\ & = {2}^{- n} {\sum }_{x ∈ {ℤ}_{2}^{\times n}} {Λ}_{2 \left|x\right| - {x}_{1}}^{\left(j\right)} {\prod }_{m = 1}^{L \left(j\right)} {U}_{m}^{\left(j\right)} \left\{{U}_{+}^{†}\left[{\left({iγ}_{1}\right)}^{{x}_{1}}{Z}^{x}\right]\right\} . & \left(101\right)\end{matrix}$

Since these quantum circuits act as 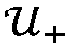 on-net, this gives ${U}^{\left(j\right)} \left(\left|+\right〉{\left〈+\right|}^{⊗ n}\right) = {2}^{- n} {\sum }_{x ∈ {ℤ}_{2}^{\times n}} {Λ}_{2 \left|x\right| - {x}_{1}}^{\left(j\right)} {\left({iγ}_{1}\right)}^{{x}_{1}} {Z}^{x} .$

Measuring in the *Y*-basis on the first qubit and the Z-basis on all other qubits gives $\begin{matrix}\left〈{+}_{y}y\right| {U}^{\left(j\right)} \left(\left|+\right〉{\left〈+\right|}^{⊗ n}\right) \left|{+}_{y}y\right〉 = {2}^{- n} {\sum }_{x ∈ {ℤ}_{2}^{\times \left(n-1\right)}} \left({Λ}_{2 \left|x\right|}^{\left(j\right)}+{Λ}_{2 \left|x\right| + 1}^{\left(j\right)}\right) {\left(-1\right)}^{x ⋅ y} & \left(103\right) \\ = {2}^{- n} {\sum }_{k = 0}^{n - 1} \left({Λ}_{2 k}^{\left(j\right)}+{Λ}_{2 k + 1}^{\left(j\right)}\right) {\sum }_{x \left|k\right.} {\left(-1\right)}^{x ⋅ y} & \left(104\right) \\ = {2}^{- n} {\sum }_{k = 0}^{n - 1} \left({Λ}_{2 k}^{\left(j\right)}+{Λ}_{2 k + 1}^{\left(j\right)}\right) {M}_{\left|y\right| k}^{\left(n-1\right)} . & \left(105\right)\end{matrix}$

Summing again over all probabilities of a fixed Hamming weight gives $\begin{matrix}{\sum }_{y \left|l,n-1\right.} \left〈{+}_{y}y\right| {{U}^{˜}}^{\left(j\right)} \left(\left|+\right〉{\left〈+\right|}^{⊗ n}\right) \left|{+}_{y}y\right〉 & = {2}^{- n} {\sum }_{k = 0}^{n - 1} \left({Λ}_{2 k}^{\left(j\right)}+{Λ}_{2 k + 1}^{\left(j\right)}\right) {\sum }_{y \left|l,n-1\right.} {M}_{\left|y\right| k}^{\left(n-1\right)} & \left(106\right) \\ & = {2}^{- n} \left(\begin{matrix}n - 1 \\ l\end{matrix}\right) {\sum }_{k = 0}^{n - 1} \left({Λ}_{2 k}^{\left(j\right)}+{Λ}_{2 k + 1}^{\left(j\right)}\right) {M}_{lk}^{\left(n-1\right)} . & \left(107\right)\end{matrix}$

The corresponding probability for the "-" outcome on the first bit is given by ${\sum }_{y \left|l,n-1\right.} \left〈{-}_{y}y\right| {{U}^{˜}}^{\left(j\right)} \left(\left|+\right〉{\left〈+\right|}^{⊗ n}\right) \left|{-}_{y}y\right〉 = {2}^{- n} \left(\begin{matrix}n - 1 \\ l\end{matrix}\right) {\sum }_{k = 0}^{n - 1} \left({Λ}_{2 k}^{\left(j\right)}-{Λ}_{2 k + 1}^{\left(j\right)}\right) {M}_{lk}^{\left(n-1\right)}$ and this gives the desired relations $\frac{1}{2} \left({P}_{+}^{\left(j\right)}+{P}_{-}^{\left(j\right)}\right) = {2}^{- n} {d}^{\left(n-1\right)} ⋅ {M}^{\left(n-1\right)} ⋅ {Λ}_{even ∖ \left\{2n\right\}}^{\left(j\right)}$ $\frac{1}{2} \left({P}_{+}^{\left(j\right)}-{P}_{-}^{\left(j\right)}\right) = {2}^{- n} {d}^{\left(n-1\right)} ⋅ {M}^{\left(n-1\right)} ⋅ {Λ}_{odd}^{\left(j\right)} .$

By estimating these probabilities, the method collectively estimates all of the noise eigenvalues. To simplify the notation, one can collect these transformations into a global one over all experiments as $Λ = VP$ where $V = {V}_{z} ⊕ {V}_{x}$ and 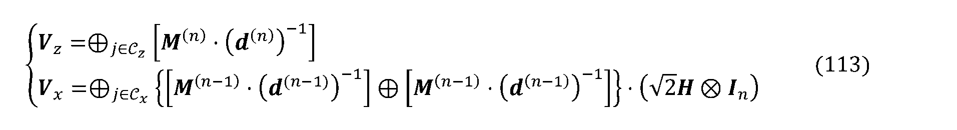 with ***H*** as the 2 × 2 Hadamard transform. These transformations are used to reconstruct the global set of circuit eigenvalues and subsequently reconstruct the gate eigenvalues. The protocol proceeds as follows: given a set of elementary gates 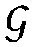 to characterize, implement an ensemble of these quantum circuits composed of the corresponding FLO-twirled gates. Each quantum circuit in the ensemble has eigenvalue given by the design matrix ${Λ}_{k}^{\left(j\right)} = {\prod }_{g ∈ G} {ξ}_{g , k}^{{A}_{j , g}}$ where the design matrix element *A_{j,g}* corresponds to the number of occurrences of gate *g* in the *j^{th}* quantum circuit. Then physically sample the Born-rule probabilities defined in Equations (75) and (76) to obtain empirical estimates ***P̂***^{(*j*)} of these distributions for each *j*^{th} quantum circuit, and apply the transformations from the proofs of Equations (80), (81) and (82) to produce estimators **Λ̂**^{(*j*)} for the associated circuit eigenvalues. Finally, fit the gate eigenvalue estimates to the circuit eigenvalue data using a log-linear model. That is, the estimator for each Majorana degree *k* is the solution to a system of equations of the form ***Ax** = **b***, where A is the design matrix: ${x}_{g , k} = - log \left({ξ}_{g , k}\right) ,$ and ${b}_{g , k} = - log \left({Λ}_{k}^{\left(j\right)}\right) .$

The definition of the Estimator of the noise parameters is now presented more formally.

For a FACES model 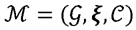 *,* from which the method obtains the design matrix ***A**,* the FACES estimator for *ξ̂* is taken as *ξ̂_{g,k}* = exp(-*x̂_{g,k}*) for each *g, k,* with ${\hat{x}}_{g , k} = \left\{\begin{matrix}{\left({A}^{+}\hat{b}\right)}_{g , k} & {\left({A}^{+}\hat{b}\right)}_{g , k} \geq 0 \\ 0 & otherwise\end{matrix}.\right.$

That is, the method may take the estimator given by ordinary least-squares, projected onto the positive orthant for each Majorana degree *k*. One could of course consider other estimators, such as ***x̂***' taken to be the element of the positive orthant that minimizes ∥***Ax̂**'* - ***b̂***∥₂, or even an estimator that maximizes a likelihood function subject to a positivity constraint. These are convex programs and would be efficient to consider as practical estimators. However, the present choice of estimator is convenient from the standpoint of proving sample-complexity guarantees, which are discussed below.

### Sample Complexity

This section analyses the sample complexity required to bound the error on the estimator *ξ̂* in the above definition. The results can be summarised in a theorem, which can be formulated as the following.

Supposing both ${Λ}_{k}^{\left(j\right)} \geq \frac{1}{2}$ and ${\hat{Λ}}_{k}^{\left(j\right)} \geq \frac{1}{4}$ for all degree sectors *k* and experiments *j,* then the FACES estimator satisfies ${\left‖\hat{ξ}-ξ\right‖}_{∞} \leq 4 ε {\left‖{A}^{+}\right‖}_{∞}$ where $max {\left‖δ{P}^{\left(j\right)}\right‖}_{1} \leq ε$ is a uniform upper bound on the 1-norm error in the estimate of the Born rule probabilities.

Here the matrix norm ∥·∥_{∞} is defined in terms of the vector oo-norm as ${\left‖A\right‖}_{∞} = {max}_{x \neq 0} \frac{{\left‖Ax\right‖}_{∞}}{{\left‖x\right‖}_{∞}}$ and can be computed as the maximum value of the vector 1-norm of each row. It is therefore required that $S = Θ \left(\frac{n {\left‖{A}^{+}\right‖}_{∞}^{2} log \left(J/δ\right)}{{ε}^{2}}\right)$ samples per experiment to guarantee error *ε* with probability 1 - *δ*.

This can be proved in two parts. First, a result that bounds the sensitivity of the gate-noise eigenvalue estimates in terms of the sample estimates of the Born rule probabilities of each experiment will be proven. The main theorem on sample complexity then follows from results concerning the estimating probability distributions from samples in the 1-norm.

The proofs rely on several applications of the mean value theorem, which are now recalled for completeness.

Let $f : \left[a, b\right] \to ℝ$ be a continuous function on the closed interval [*a, b*] and differentiable on the open interval (*a, b*) for *a < b*. The mean value theorem states that there then exists some *c* ∈ (*a, b*) such that $f ′ \left(c\right) = \frac{f \left(b\right) - f \left(a\right)}{b - a} .$

To prove Equations (118) and (119), note that the logarithms of the circuit and gate eigenvalues satisfy a linear relationship $Ax = b$ where *xᵢ* = -log(*ξᵢ*) and *bᵢ* = -log(Λ*ᵢ*), and the compound indices are collected into single indices for simplicity. Letting *δxᵢ* ≡ ***x̂**ᵢ- xᵢ,* define the function ${u}_{i} \left(t\right) = exp \left({x}_{i}+{tδx}_{i}\right)$ for each i, such that *uᵢ*(0) *= ξᵢ* and *uᵢ*(1) *= ξ̂*ᵢ. Applying Equation (121) (mean value theorem) to each such function separately, $\begin{matrix}{\hat{ξ}}_{i} - {ξ}_{i} = {u}_{i} \left(1\right) - {u}_{i} \left(0\right) \\ = {u}_{i}^{′} \left({c}_{i}\right) \\ {\hat{ξ}}_{i} - {ξ}_{i} = {δx}_{i} exp \left({x}_{i}+{c}_{i}{δx}_{i}\right)\end{matrix}$ for some *cᵢ* ∈ (0,1). The exponential function is monotonic, which guarantees that the absolute value of the error is less than or equal to the value of the right-hand side for *cᵢ* = 0 (if *δxᵢ* < 0) or *cᵢ* = 1 (if *δxᵢ* > 0). Using the definition of the gate eigenvalue and the estimate thereof gives $\left|{\hat{ξ}}_{i}-{ξ}_{i}\right| \leq \left|{δx}_{i}\right| max \left({\hat{ξ}}_{i}, {ξ}_{i}\right) \leq \left|{δx}_{i}\right|$ where the second inequality follows since it is assumed that the true gate eigenvalue and its estimate are upper bounded by 1. This gives the inequality in terms of vector norms ${\left‖\hat{ξ}-ξ\right‖}_{∞} \leq {\left‖δx\right‖}_{∞} .$

Next, let ***x̃*** := ***A**⁺**b̂*** be the ordinary least-squares estimator. Then $\left|{δx}_{i}\right| = \left\{\begin{matrix}\left|{{x}^{˜}}_{i}-{x}_{i}\right| & {x}^{˜} > 0 \\ \left|{x}_{i}\right| & {x}^{˜} \leq 0\end{matrix}\right. .$

Thus |*δxᵢ*| ≤ |*x̃ᵢ - xᵢ*| for all *i*, and this leads to ∥*δ**x***∥_{∞} ≤ ∥***x̃*** - ***x***||_{∞}. By assuming the realizable setting and that ***A*** is full rank, then ***x*** = ***A*⁺*b*,** and this gives ${\left‖\hat{ξ}-ξ\right‖}_{∞} \leq {\left‖{A}^{+}\left(\hat{b}-b\right)\right‖}_{∞} \leq {\left‖{A}^{+}\right‖}_{∞} {\left‖\hat{b}-b\right‖}_{∞}$ where the second inequality follows from submultiplicativity of the norm. The norm on ***A*⁺** is the induced ∞ → ∞ norm, defined as ${\left‖X\right‖}_{∞} = {max}_{i} {\sum }_{j} \left|{X}_{ij}\right|$. In the setting where ***A*** does not have full column rank, its pseudoinverse is still well-defined, but the model includes at least one unlearnable, or "gauge" parameter that is inaccessible to the framework (for a detailed investigation of this, see [11,12])

The error on ***b*** is bounded similarly. Letting *δ*Λ*ᵢ* = Λ̂*ᵢ* - *Λ*ᵢ, define ${v}_{i} \left(t\right) = log \left({Λ}_{i}+tδ{Λ}_{i}\right)$ for each index i such that *vᵢ*(0) = *bᵢ* and *vᵢ*(1) = *b̂ᵢ*. This gives $\begin{matrix}{\hat{b}}_{i} - {b}_{i} & = {v}_{i} \left(1\right) - {v}_{i} \left(0\right) \\ & = {v}_{i}^{′} \left({{c}^{˜}}_{i}\right) \\ & = \frac{{δΛ}_{i}}{{Λ}_{i} + {{c}^{˜}}_{i} {δΛ}_{i}}\end{matrix}$ for *c̃ᵢ* ∈ (0,1). The function on the right-hand side is monotonic in *c̃ᵢ*, so its absolute value is maximised for *c̃ᵢ* = 0 (if *δ*Λᵢ > 0) or *c̃ᵢ* = 1 (if *δ*Λ*ᵢ* < 0). This gives $\begin{matrix}\left|{\hat{b}}_{i}-{b}_{i}\right| \leq \left|δ{Λ}_{i}\right| max \left[{\hat{Λ}}_{i}^{- 1}, {Λ}_{i}^{- 1}\right] \\ \left|{\hat{b}}_{i}-{b}_{i}\right| \leq 4 \left|δ{Λ}_{i}\right|\end{matrix}$ by the assumption that both ${Λ}_{i} \geq \frac{1}{2}$ and ${\hat{Λ}}_{i} \geq \frac{1}{4}$ for all i. Finally, this is used to provide a bound on ∥***b̂*** - ***b***∥_{∞} as $\begin{matrix}{\left‖\hat{b}-b\right‖}_{∞} & \leq 4 {\left‖δΛ\right‖}_{∞} \\ & = 4 {\left‖VδP\right‖}_{∞} \\ & \leq {max}_{j} \left(4{\left‖δ{P}^{\left(j\right)}\right‖}_{1}\right) \\ {\left‖\hat{b}-b\right‖}_{∞} & \leq 4 ε .\end{matrix}$

From the second to the third line above, the maximum over indices *i* in ∥·∥_{∞} is replaced with a maximization first over each experiment and then within each experiment. This is followed by applying the norm inequality ∥·∥_{∞} ≤ ∥|·|∥_{1→∞}∥·∥₁ experiment by experiment and using the fact that the maximum absolute element of ***V*** is 1 in each case from Equation (113). Combining Equation (132) with Equation (128) gives the result.

### Numerics

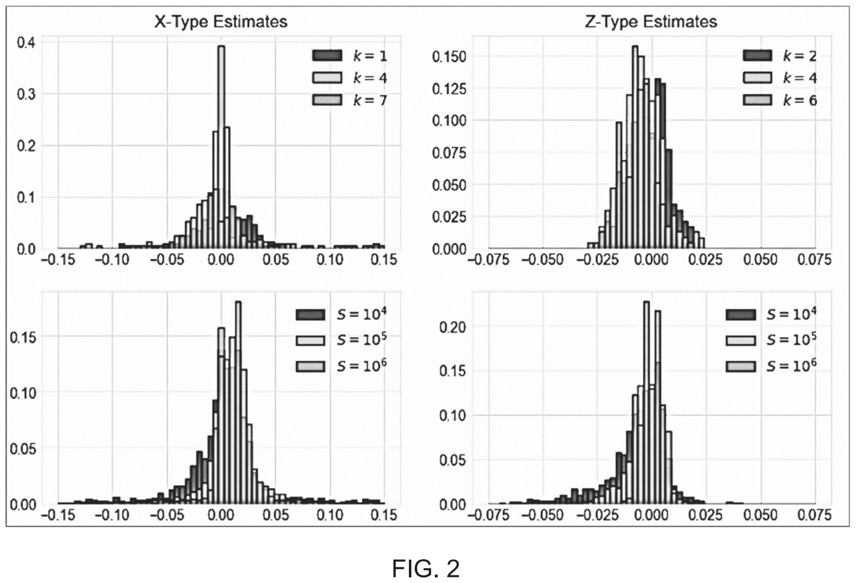

The efficacy of the protocol can be seen numerically in FIG. 2, which shows a histogram of relative gate-eigenvalue errors for *n* = 5 qubits (2*n* = 10 fermionic modes) and *m* = 1000 quantum circuits for each experiment type. The noise model is given by a random 2-qubit Pauli channel following each gate applied, where the Pauli channel probabilities are chosen uniformly from the interval [10⁻² - 10⁻³, 10⁻² + 10⁻³]. Columns are partitioned according to *x*- and *z*-type estimates, and rows are partitioned according to whether the different histograms correspond to different Majorana weight-*k* or different numbers *S* of samples from the Born-rule probability distribution (assuming that one can apply FLO-twirled circuits exactly). *Z*-rotation angles are partitioned into 46 bins of width $Δθ = \frac{π}{23}$. The protocol is able to routinely achieve less than 5% relative error for most of the eigenvalues estimated, and that this steadily improves with the number of shots.

In the next section a worked example is implemented highlighting a specific embodiment of the methods disclosed herein.

### Worked Example

Before working through the example below, the necessary terminology will be stated again, as above. Recall that the term *control operation* is defined to be a physical operation performed (by an experimenter or user) on a quantum device. The notation for this will be *G*, or for a collection of control operations, the list/tuple (*G*₁, *... G_{K}*)*,* or set {*G₁, ... G_{K}*}*.* The term *logical operation* is defined as the operation on the quantum information effected by a specific control operation, and may be represented by *V* := *V_{G},* for some *G* ∈ {*G₁, ... G_{K}}.* Finally, the *noise channel* is the error channel that relates the ideal logical unitary *V_{G}* to the noisy implementation *Ṽ_{G},* which may be denoted ${ε}_{G} : = {V}_{G}^{†} {{V}^{˜}}_{G}$ (hence *V_{G}ε_{G} = Ṽ_{G}*), recall Equation (58) above. The subscripts indicate reference to a specific control operation. Recall that many control operations may correspond to the same logical unitary, i.e., *V*_{*G*₁} *= V*_{*G*₂} = *··· V_{G} = V,* but also that each noise channel is specific to its control operation, *ε_{Gⱼ} = V^{†}Ṽ_{Gⱼ}.* That is, different control operations are subject to different noise processes. The subscripts for *V* may be dropped in what follows, for clarity.

A noise-free logical operation may be referred to as an ideal logical operation, ideal operation, or ideal gate. The steps in the protocol in correspondence with FIG. 1 are reintroduced as follows.

A noise-free logical operation is referred to as an ideal logical operation, ideal operation, or ideal gate. The relevant steps in the protocol in correspondence with FIG. 1 are recalled as follows.
(a) The method receives as input, a model 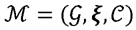 comprising:
   a list of unique control operations 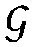 := (*G*₁*, ..., G_{K}*)*,* each corresponding to Fermionic linear optical (FLO) ideal gate;
   a collection of parameters *ξ* := (*ξ*₁, ..., *ξ_{K}*) describing the noise on control operations in 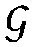 , - here *ξₖ* is a real-valued vector of 2n + 1 parameters associated to *Gₖ* for each *k* ∈ {1, ... , *K*}; (these are the parameters to learn). As discussed below, *K = n* + 1 for *z*-type experiments and *K* = 2*n* for *x*-type experiments;
   a collection of quantum circuits 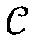 := (*C*₁, *... , C_{J}*) composed of the control operations in 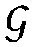 , wherein
      each quantum circuit is an ordered list of (possibly repeated) elements from 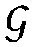 for all *j* ∈ {1, ...,*J*};
      each quantum circuit *Cⱼ* act, in the absence of noise, as either the identity ("*z-*type") or a particular ("*x*-type") unitary *U*₊ (as defined above).
(b) From the model 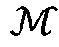 , compute a design matrix A, for which the element *Aⱼₖ* gives the number of appearances of *Gₖ* in the quantum circuit *Cⱼ*. The method assumes that *J* ≥ *K* (the number of quantum circuits must be at least the number of gates), and ***A*** must be chosen in line with the constraints imposed by the diversity criterion.
(c) To each quantum circuit *Cⱼ* ∈ 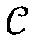 , associate an ensemble of randomly sampled quantum circuits by replacing ${C}_{j , l} \to \left({U}_{j , l}{V}^{†}{U}_{j , l}^{†}\right) \left({C}_{j , l}\right) \left(V\right)$*,* for each control operation *C_{j,l}* ∈ *Cⱼ*, where *U_{j,l}* is the ideal gate corresponding to *C_{j,l}* and V is a Haar random ideal FLO unitary sampled independently for each *C_{j,l}*. For each *Cⱼ* ∈ 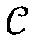 , quantities given by averaging over *V*, called "FLO-twirled" quantities are considered. Here *C_{j,l}* denotes the *l*^{th} element of the quantum circuit *Cⱼ*. For example, if 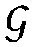 = (*G₁, G₂, G₃*) for 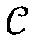 *=* {*C*₁*, C*₂} with C₁ = *G₁G₂G₃* and C₂ = *G₃G₁G₂,* then *C*_{1,1} = *G*₁, *C₁,₂* = *G*₂ and *C*_{1,3} *= G*₃*.* Also, *C*_{2,1} = *G*₃, *C*_{2,2} = G₁ and *C*_{2,1} = *G₂.*
(d) For each *z*-type circuit, prepare the all-zeroes state |**0**〉, apply the circuit, measure in the computational basis, and record the number of 1's observed (in the ideal case, this number is always zero). The FLO-twirled probability of observing *l* 1's for all *l* ∈ {0, *... , n*} are then estimated. Similarly, for each *x*-type circuit, prepare the all-plus state |+〉^{⊗*n*}, apply the circuit, measure the first qubit in the Pauli-Y basis, and measure the remaining qubits in the computational basis. Record the *Y*-basis measurement outcome as well as the number of 1's on the remaining qubits, and estimate the FLO-twirled joint probability of observing "+" on the first qubit and *l* 1's on the remaining qubits as well as the FLO-twirled joint probability of observing "-" on the first qubit and *l* 1's on the remaining qubits, for *l* ∈ {0, *... , n* - 1}.
(e) Apply a linear transformation - called a Kravchuk transformation - to the collection of estimated probabilities to obtain a collection of aggregate parameters for each quantum circuit, called the circuit eigenvalues A = {Λ₁, ... , Λ*_{N}*}.
(f) The circuit eigenvalues are related to the desired noise parameters ***ξ*** by a log-linear transformation. That is, a model of the form *A**x** = **b*** is constructed, where ***x*** = (*x*₁*,* ... *x_{N}*)*, **b** =* (*b*₁*, ... , b_{N}*), *xᵢ* = -log*ξᵢ* and *bᵢ* = - log Λ*ᵢ*. By convention, a minus sign may be included to make these quantities non-negative. Linear regression is then performed to estimate ***x*** and then exponentiated to recover the estimates for the noise ***ξ***.

In the following example, consider the case where there are multiple control operations that correspond to the same logical operation. Specifically, FACES can cater to the cases where there are any number of control operations corresponding the same logical operations, including where there is a one-to-one correspondence between control operations and logical operations.

Consider the 2-qubit model given by $G = \left(U\to G\left(H, H\right),{R}_{1}\to exp\left(\frac{{iπZ}_{1}}{4}\right),{{R}_{1}}^{˜}\to exp\left(\frac{{iπZ}_{1}}{4}\right),{R}_{2}\to exp\left(\frac{{iπZ}_{2}}{4}\right)\right)$ $ξ = \left({ξ}^{\left(1\right)}, {ξ}^{\left(2\right)}, {ξ}^{\left(3\right)}, {ξ}^{\left(4\right)}\right) , where {ξ}^{\left(i\right)} = \left({ξ}_{0}^{\left(i\right)}, {ξ}_{1}^{\left(i\right)}, {ξ}_{2}^{\left(i\right)}, {ξ}_{3}^{\left(i\right)}, {ξ}_{4}^{\left(i\right)}\right) for all i ∈ \left\{1, 2, 3, 4\right\} .$

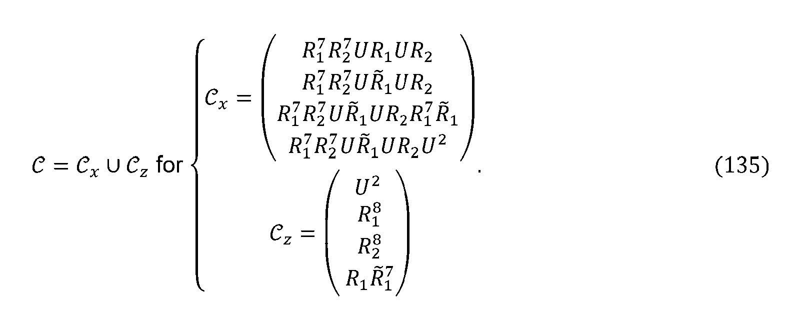

In Equation (113), the notation *A* → *B* specifies *B* as the ideal logical operation implemented by the control operation *A* (in particular, the channel 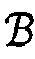 (*X*) *= BXB*^{†} is applied). Note that two of the control operations, *R*₁ and *R̃*₁, implement the same ideal logical operation. *G*(*H, H*) is the matchgate given by applying the single-qubit Hadamard to the even- and odd-parity subspaces of a 2-qubit Hilbert space independently. Each control operation corresponds to a collection of five noise parameters as shown in Equation (134). For each experiment type (either *x* or *z*), the method constructs a corresponding collection of quantum circuits 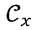 or 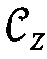 . Each such collection leads to a distinct design matrix ${A}_{x} = \left(\begin{matrix}2 & 8 & 0 & 8 \\ 2 & 7 & 1 & 8 \\ 2 & 14 & 2 & 8 \\ 4 & 7 & 1 & 8\end{matrix}\right)$ and ${A}_{z} = \left(\begin{matrix}2 & 0 & 0 & 0 \\ 0 & 8 & 0 & 0 \\ 0 & 0 & 0 & 8 \\ 0 & 1 & 7 & 0\end{matrix}\right)$ where the rows are labelled by quantum circuits from the ensemble (in the same order as listed in Equation (135)) and columns are labelled by the control operations from 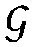 . (in the same order as listed in Equation (133)). Each element of the design matrix counts the number of occurrences of the corresponding control operation in the corresponding quantum circuit.

The log linear model is derived due to the logarithmic identities log(*a^{b}*) = *b* log(*a*) and log(*cd*) = log(*c*) + log(*d*). For the matrix ***A**_{z}* above, without twirling, for a vector *a* = (log(*U*) , log(*R*₁) , log(*R̃*₁) , log(*R*₂))*^{T}*, the following relation is derived: ${A}_{z} a = \left(\begin{matrix}2 log \left(U\right) \\ 8 log \left({R}_{1}\right) \\ 8 log \left({R}_{2}\right) \\ log \left({R}_{1}\right) + 7 log \left({{R}^{˜}}_{1}\right)\end{matrix}\right) = \left(\begin{matrix}log \left({U}^{2}\right) \\ log \left({R}_{1}^{8}\right) \\ log \left({R}_{2}^{8}\right) \\ log \left({R}_{1}{{R}^{˜}}_{1}^{7}\right)\end{matrix}\right) .$

Therefore, the original vector of Equation (135) is recovered as a logarithm of its entries. Also note that in this example, if the matrix is not full rank, say the top left element of ***A**_{z}* is zero, then information of the gate *U* is partially lost.

Next, twirl each quantum circuit in 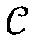 *,* as explained in step (c) of FIG. 1, and estimate FLO-twirled probabilities as explained in step (d) of FIG. 1, as well as the above sections on noise, twirling and channel eigenvalues. The collection of *x*-type experiments gives the estimated probability distribution ${P}_{x}^{\left(j\right)} : = \left({P}_{x , \left(+,0\right)}^{\left(j\right)}, {P}_{x , \left(-,0\right)}^{\left(j\right)}, {P}_{x , \left(+,1\right)}^{\left(j\right)}, {P}_{x , \left(-,1\right)}^{\left(j\right)}\right)$ for each *j*^{th} x-type quantum circuit. Similarly, the collection of z-type experiments give the estimated distribution ${P}_{z}^{\left(j\right)} : = \left({P}_{z , 0}^{\left(j\right)}, {P}_{z , 1}^{\left(j\right)}, {P}_{z , 2}^{\left(j\right)}\right)$ for each *z*-type circuit *j.* Hence, since this is a 2-qubit system, ${P}_{x , \left(+,0\right)}^{\left(j\right)}$ is the probability that for an *x*-type experiment the first qubit is measured in the plus state, and the second qubit in the zero state. ${P}_{z , 2}^{\left(j\right)}$ is then the probability that for a *z*-type experiment both qubits are measured as 1. For z-type experiments in general (*n*-qubit) systems, the method measures the number of 1's, which can range from zero to *n*, therefore the dimension of the input vector to the Kravchuk transform is *n* + 1. In the case of *x*-type experiments, there are two options with one qubit measured in the Pauli-*Y* basis (either "+" or "-"), giving (again for an *n*-qubit system) *n* - 1 remaining qubits, where the number of 1's can range from zero to n - 1. Therefore, the dimension of the input vector to the Kravchuk transform is 2*n*. There are 2-options for the Pauli-Y measurements, and, for each option, n possible outcomes (a number of 1's from zero to *n* - 1). This gives a total of 2n outcomes. Taking the Kravchuk transformation as in step (e) of FIG. 1 gives the circuit eigenvalues $\left(\begin{matrix}{Λ}_{0}^{\left(j\right)} \\ {Λ}_{1}^{\left(j\right)} \\ {Λ}_{2}^{\left(j\right)} \\ {Λ}_{3}^{\left(j\right)}\end{matrix}\right) = \left(\begin{matrix}1 & 1 & 1 & 1 \\ 1 & - 1 & 1 & - 1 \\ 1 & 1 & - 1 & - 1 \\ 1 & - 1 & - 1 & 1\end{matrix}\right) \left(\begin{matrix}{P}_{x , \left(+,0\right)}^{\left(j\right)} \\ {P}_{x , \left(-,0\right)}^{\left(j\right)} \\ {P}_{x , \left(+,1\right)}^{\left(j\right)} \\ {P}_{x , \left(-,1\right)}^{\left(j\right)}\end{matrix}\right)$ and $\left(\begin{matrix}{Λ}_{0}^{\left(j\right)} \\ {Λ}_{2}^{\left(j\right)} \\ {Λ}_{4}^{\left(j\right)}\end{matrix}\right) = \left(\begin{matrix}1 & 1 & 1 \\ 1 & 0 & - 1 \\ 1 & - 1 & 1\end{matrix}\right) \left(\begin{matrix}{P}_{z , 0}^{\left(j\right)} \\ {P}_{z , 1}^{\left(j\right)} \\ {P}_{z , 2}^{\left(j\right)}\end{matrix}\right)$ for each *j*^{th} quantum circuit. Note that the two experiments give overlapping information (for ${Λ}_{0}^{\left(j\right)}$ and ${Λ}_{2}^{\left(j\right)}$), but neither collection of circuit eigenvalues strictly contains the other. Defining the regression data from the circuit eigenvalues as ${b}_{j}^{\left(k\right)} = - log \left({Λ}_{k}^{\left(j\right)}\right)$ and the fit parameters as ${x}_{i}^{\left(k\right)} = - log \left({ξ}_{k}^{\left(i\right)}\right)$, (note that upper and lower indices are switched), gives linear regression models of the form ${A}_{x} {x}^{\left(k\right)} = {b}^{\left(k\right)} for k ∈ \left\{0, 1, 2, 3\right\} ,$ ${A}_{z} {x}^{\left(k\right)} = {b}^{\left(k\right)} for k ∈ \left\{0, 2, 4\right\} .$

Because both ***Aₓ*** and ***A**_{z}* are full column rank in this example, the parameters ***x***^{(*k*)} for each *k* can be fitted and then exponentiated to obtain estimates for the gate eigenvalue parameters ***ξ***^{(*i*)} for all *i.* The essential feature of this method is that it can learn many gate eigenvalues simultaneously in a non-trivial quantum circuit. In particular, this is necessary for the x-type experiments, which require a non-trivial quantum circuit to apply the desired unitary *U*₊.

Note that in other example embodiments, it may be the case that either ***A**ₓ* or ***A**_{z}* may not be full rank. As will be illustrated with this example, if only the design matrix for 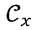 was full rank, and say the design matrix for 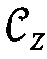 was column rank n - 1 with second column all zeros, that is, replacing ***A**_{z}* with ***Ã**_{z}*, where ${{A}^{˜}}_{z} = \left(\begin{matrix}2 & 0 & 0 & 0 \\ 0 & 0 & 0 & 0 \\ 0 & 0 & 0 & 8 \\ 0 & 0 & 7 & 0\end{matrix}\right) ,$ all information for ${x}_{2}^{\left(k\right)} = - log \left({ξ}_{k}^{\left(2\right)}\right)$ will be lost via ***Ã**_{z}**x***^{(*k*)}*.* The information on ${ξ}_{k}^{\left(2\right)}$ could however still be retrieved via the linear system involving ***Ã**ₓ**x***^{(*k*)}*.*

Furthermore, in this example it can be seen that there is a redundancy, where the "0" and "2" noise parameters of each experiment type can be derived from either linear system. This can be explicitly seen from the overlapping sets for *k* in each of the Equations (141) and (142). As previously remarked, observe that the general constraint on the rank of the design matrices is therefore that each design matrix for each linear system in each experiment type must have column rank greater than or equal to the number of noise parameters per gate, and wherein each design matrix across all experiment types should not have the same redundant column. This ensures each of the 2*n* + 1 noise parameters can be found (for each *k*) across each experiment type.

In the event there is overlap in information from each experiment type, as described above, the user is free to select the noise data however they wish. The user can, for instance, either select the noise data from either experiment type, or average the noise parameters calculated from all experiment types, or similar. The accuracy of the estimated noise parameters in both experiment types are similar, and increases with the number of shots, as described above with reference to FIG. 2.

FIG. 11 shows Histogram data for the relative error of the learned eigenvalues in the example discussed in this section (*k* = 0 case not shown) using both *x-* and *z*-type experiments. The true gate eigenvalues are generated from 2-qubit Pauli error channels with Pauli probabilities randomly generated around 0.6%.

FIG. 12 shows Histogram data for the relative error of the learned eigenvalues in the example discussed in this section (*k* = 0 case not shown) using both *x-* and *z*-type experiments. The true gate eigenvalues are generated from 2-qubit Pauli error channels with Pauli probabilities randomly generated around 0.06%. Note the interval [0.5625%, 0.6875%] (randomly generate around 0.6%) in FIG. 11 and [0.05625%, 0.06875%] (randomly generated around 0.06%) in FIG. 12.

FIG. 11 shows that the noise can be learned to nearly 20% from the *x*-type data, and it is routinely learned to within 2% for the *z*-type data. This discrepancy is explainable by the difference in the infinity-norm condition numbers, represented as *k*_{∞}, between ***A**ₓ* and ***A**_{z}*, for which *k*_{∞}(***A**ₓ*) = 45.5 and *k_{∞}*(***A**_{z}*) *=* 4. The infinity-norm condition number represents the worst-case relative error in the solutions ***x***^{(*k*)} to Equation (141) and Equation (142) under perturbations to ***b***^{(*k*)}. Since this value is roughly 10 times larger for the *x*-type experiments than the *z*-type experiments, the range of relative errors is expected to be correspondingly 10 times larger for the *x*-type experiments than the *z*-type experiments. This feature persists for smaller values of the underlying Pauli probabilities as shown in FIG. 12, though the gate eigenvalues are learnt to within 2% even for the *x*-type experiments in this setting.

Furthermore, this data demonstrates how the worst-case condition number can be used to inform the choice of implemented circuits (where collections of circuits for which this value is small are ideal) as well as which of the *x*-type or *z*-type estimates should be favoured when the two of them overlap.

### Variants on additional operations

As described above, the method also caters to the case where enlarging the quantum circuits comprises only adding additional operations to be placed around or adjacent to *some* of the circuit components. That is, it is not necessary for *each* of the control operations to be associated with additional operations. The following section discusses that this is indeed possible, and also comments on how the general method is affected in such a case.

An illustrative example concerns the case where a user wishes to add operations to the circuit operations that resulted in a logical (i.e. theoretical) identity. The following example will use twirling as the method of inserting additional operations into the circuit, although more generalised methods of inserting additional operations in the circuit would readily suffice. Consider a quantum circuit composed of many twirled gates (for example, some number significantly higher than the number of untwirled gates), say *L* = 98 untwirled gates and 2 untwirled gates: 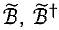 whose net effect is the logical identity in the absence of noise. The logical identity here will be denoted as 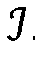 . Hence for completeness, in the absence of noise, i.e. in the logical framework, 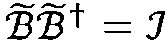 . In the presence of noise however, the physical implementation of circuitry of interest will include a term that induces an erroneous probability. To this end, define 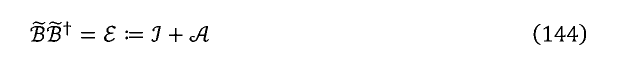 in the noisy implementation. *ε* is a completely general quantum channel, since 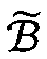 and 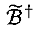 are untwirled. Namely, apply a quantum circuit 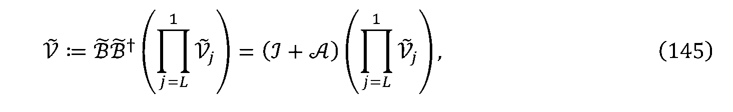 noting the change of ordering of the indices in the product, that is, ${\prod }_{j = L}^{1} {{V}^{˜}}_{j} = {{V}^{˜}}_{L} {{V}^{˜}}_{L - 1} … {{V}^{˜}}_{1}$. The partially twirled version of the circuit is obtained by replacing the circuit components 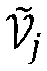 with ${{V}^{˜}}_{j}^{F \left(2n\right)}$, where the partially twirled circuit ${{V}^{˜}}^{F \left(2n\right)}$ is therefore

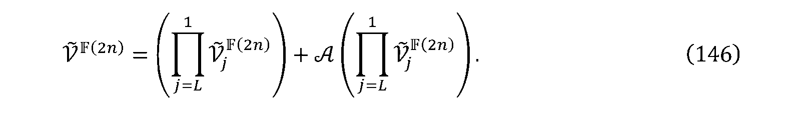

The experiments of the present invention generally may comprise applying this circuit to a stabilizer input state, such as input state $ρ ∈ \left\{\left|0\right〉\left〈0\right|,\left|+\right〉\left〈+\right|\right\}$ and measuring in a stabilizer basis (which may either be the computational basis or the Pauli-*Y*-eigenbasis on the first qubit and computational basis on the remaining qubits, as discussed above). This gives

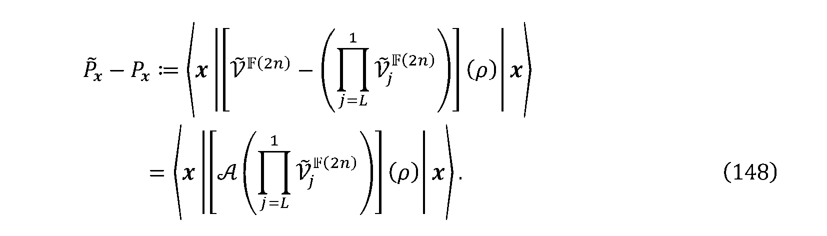

Here *Pₓ* is the ideal probability that would have been measured had the untwirled gates not been inserted, and *P̃ₓ* is the corresponding erroneous probability as described above. Let 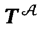 be the restriction of 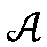 to the input stabilizer basis and output stabilizer measurement basis. Notably, this is a linear map on the ideal probabilities that has the representation $\left({\prod }_{j = L}^{1} {{V}^{˜}}_{j}^{F \left(2n\right)}\right) \left(ρ\right) = {Σ}_{y} {P}_{y} \left|y\right〉 \left〈y\right|$ since the net effect of the twirled gates in each experiment is assumed to be either the identity or *U*₊, and therefore $\begin{matrix}\left〈x\right| A \left({\prod }_{j = L}^{1} {{V}^{˜}}_{j}^{F \left(2n\right)}\right) \left(ρ\right) \left|x\right〉 = {\sum }_{y} {P}_{y} \left〈x\right| A \left(\left|y\right〉\left〈y\right|\right) \left|x\right〉 \\ : = {\sum }_{y} {T}_{xy}^{A} {P}_{y} .\end{matrix}$

Equations (148) to (150) can now be used to comment on the change in the circuit eigenvalues between the noisy and noiseless scenarios in this case. Recall that as above the notation for the circuit eigenvalues is denoted by **Λ** and **Λ̃** in both cases. Therefore, from the general probability distributions ***P*** and ***P̃*,** 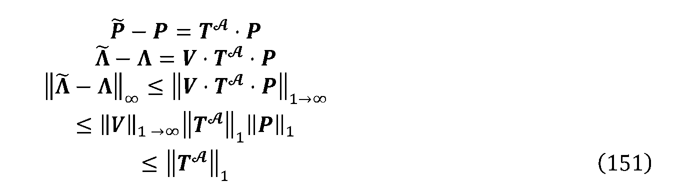 using the fact that ∥***P***∥₁ = 1 and ∥***V*** ∥_{1→∞} = 1. ∥ 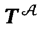 ∥₁ can be written 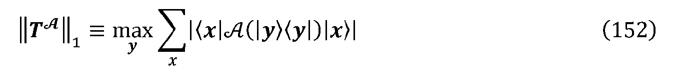 for 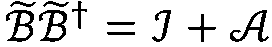 *.*

Therefore, this experiment introduces a bias in the recovered eigenvalue whose magnitude is upper bounded by that of the perturbation of the error channel from the identity channel. In principle, the additional operations (untwirled) can be placed anywhere in the circuit if the noise channels on the twirled gates are close enough to the identity that they are mathematically invertible. The result above would then be applied to the untwirled gate after commuting it to the end of the circuit.

Again, making the assumptions that have been made above in this disclosure, ${Λ}_{i} \geq \frac{1}{2}$ and ${\hat{Λ}}_{i} \geq \frac{1}{4}$ , the error on the recovered control operation (noise) eigenvalue is then 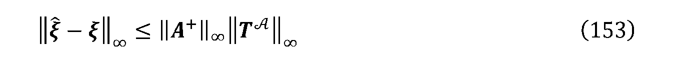 for ***A***⁺ again denoting the pseudoinverse of the design matrix ***A*,** as in Equation (2) above, for example.

In summary, this shows explicitly that the general method disclosed herein caters to the case where not every gate in a collection of quantum circuits is twirled, and additionally how this will affect the error on the recovered aggregate parameters.

### Pseudocode

In this section pseudocode implementations for the steps of the protocol described in FIG. 1 will be provided, and will be described with reference to FIGs. 3 to 9.

In FIG. 3, Algorithm 1 is the main function, which learns the gate eigenvalues ***ξ*** describing an error model 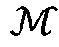 for a collection of quantum circuits 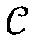 in a given number of measurements per quantum circuit *S*. The algorithm is broken up into several stages, described in more detail below.

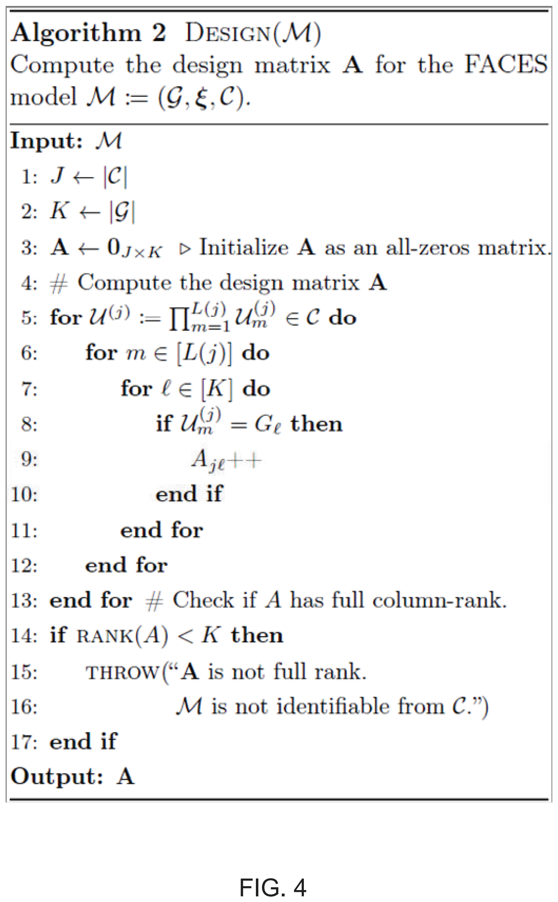

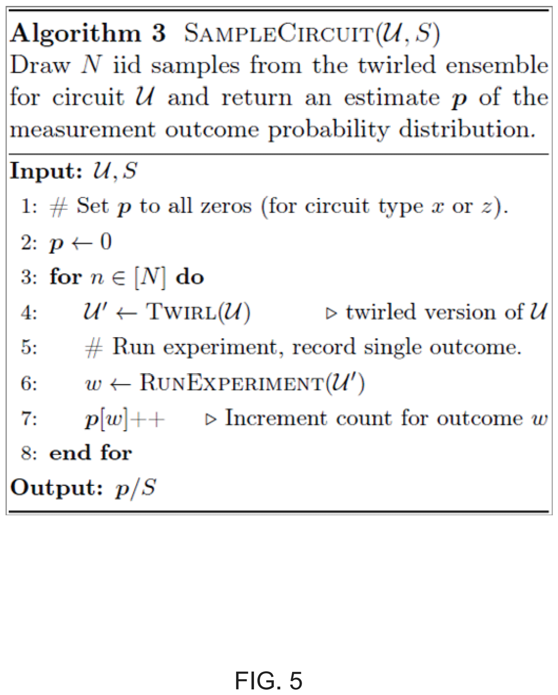

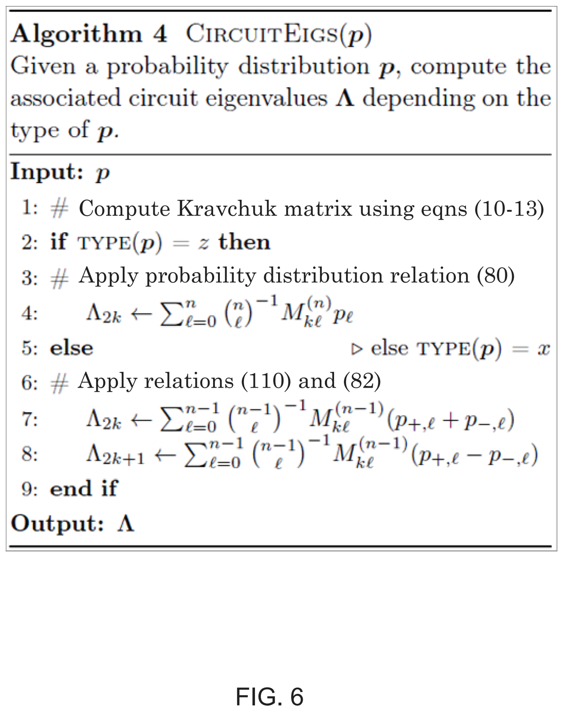

In a first stage highlighted in FIG. 4, the design matrix ***A*** is computed using Algorithm 2. The rows of this matrix are indexed by quantum circuits in 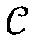 *,* and the columns are indexed by noise parameters, such that *Aⱼₖ* corresponds to the number of times the noise parameter *k* appears in the *j*^{th} quantum circuit. In FIG. 5, Algorithm 3 provides a pseudocode implementation to derive a probability distribution of outcomes generated for each quantum circuit according to its type (either "*x*" or "*z*"). These distributions, given by Equations (80), (81) and (82), are then input to Algorithm 4 of FIG.6, where they are used to calculate the circuit eigenvalues.

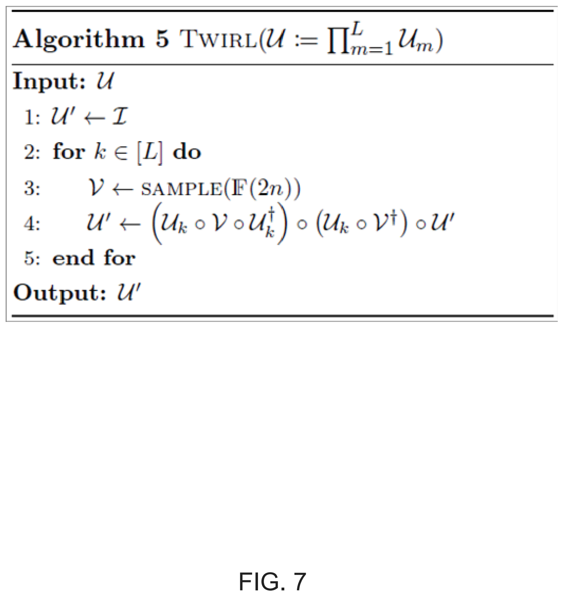

FIG. 7 gives the pseudocode implementation of the protocol for twirling each individual control operation for each quantum circuit. As discussed, the implementation of the twirling operation may include sampling from the set $F \left(2n\right)$, defined as the set of free-fermionic linear operations.

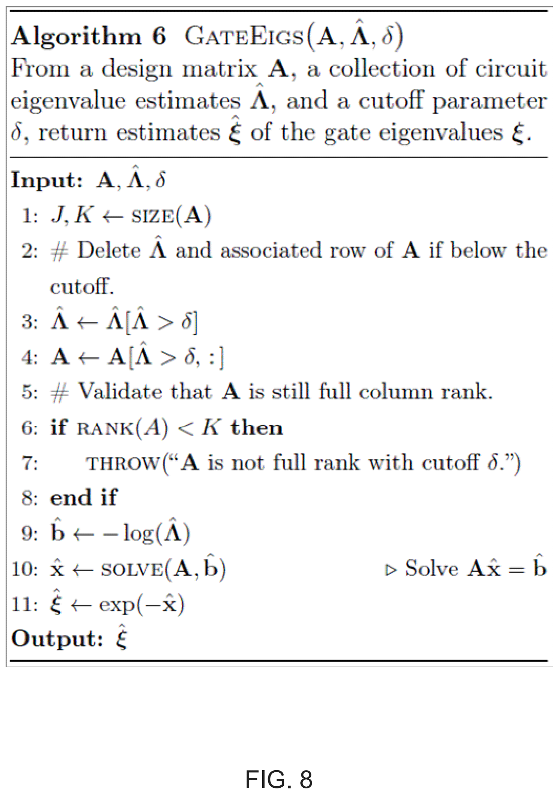

Finally in FIG. 8, Algorithm 6 is used to produce the gate eigenvalues ***ξ*** using linear inversion. In this procedure, **A** is truncated to only include its elements which lie above some given cutoff, dictated by the diversity criterion *δ*. The estimates ξ̂ for the circuit eigenvalues ***ξ*** are calculated using the function GATEEIGS, which takes as input, a design matrix **A,** a collection of circuit eigenvalue estimates Λ̂ and the diversity criterion *δ*. If **A** is still full rank, the linear equation ***Ax** = **b*** is solved, relating the logarithms of the circuit, **b,** and gate eigenvalues ***x.*** Finally, the gate eigenvalues themselves are recovered by exponentiating the components of ***x***.

FIG. 9 collectively summarises the pseudocode implementations across the range of steps in the protocol, according to one embodiment. At step S1, the protocol receives, as inputs, a set of control operations, that, when implemented on a quantum computer, will be correlated to some statistical error rates, referred to as "noise". Step S1 also receives as input, a set of specific actions. As discussed above, the set of specific actions may optionally be intrinsically connected to any of the measurement bases and/or input states. From these two inputs (as well as any additional optional constraints dictated by the user, which again as discussed may comprise a fixed location of a certain control operation, for example), the method prescribes a set of quantum circuits. The quantum circuits may comprise any number of control operations of interest, repeated or omitted (subject to the constraints imposed by the diversity criterion), and arranged to perform one of the specific actions from the set of specific actions, in the absence of noise.

At step S3, the quantum circuit is enlarged by one of any enlarging protocols previous discussed, to ensure that the specific action of each enlarged quantum circuit is identical to the specific action of the corresponding original quantum circuit in the absence of noise.

Steps S4, S5 and S6 correspond to the repeated application of steps inherently run on the quantum hardware architecture. Step S4 is the procedure of preparing an input state, wherein said input state may be dependent on and/or influence the choice of other elements of the method, including measurement basis and circuit type. Second, in step S5, each of the enlarged quantum circuits is run on the quantum hardware and finally in step S6, every circuit run implemented on the quantum hardware is measured and recorded. Step S7 acknowledges that to construct the probability distribution indicated in step S8, each quantum circuit will need to be run several times, and thus the methods of steps S4 to S6 will need to be repeated several times (the more runs statistically realising a better resolution of the probability distribution).

Steps S8 to S12 constitute a further, classical, "post-processing" of information, according to an embodiment of the methods disclosed herein. The aggregate parameters in addition to the probability distribution for each measurement result are collected in step S9 and mapped to each other via a suitable transform in step S10. In one embodiment, the Kravchuk transform may be used as an example of a linear transformation suitable for modelling each aggregate parameter as a function of the measured probability distributions.

In step S11, the aggregate parameters encoding the noise information is recovered by defining an appropriate gate noise model. Specifically, at this stage, again the method maps (using the gate noise model) the input aggregate parameters defining the noise of the collection of gates to the noise associated to each gate individually. In one embodiment, for this, a log-linear model may be used, which as previously discussed can elegantly take into account the number of appearances of each gate in a given quantum circuit using logarithmic identities. As one embodiment, the linearity of the log-linear model allows the user to apply linear inversion, via for instance, computing the pseudoinverse of the design matrix to recover the solution ***x*** to the linear system.

The final step S12, locating noise on a gate-by-gate basis, may in part incorporate elements of step S11, and as shown above, may further comprise exponentiating the solution to the linear system to retrieve the actual noise parameter estimates ***ξ̂*.** Note that, as above, in general there may be more than one parameter associated to a given control operation, and so a final part of step S12 may also optionally involve arranging each noise parameter associated to a particular quantum circuit into vector form, or more generally grouping said parameters together to clearly indicate they correspond to one particular control operation.

### Hardware Implementation

FIG. 10 depicts an example configuration for one example embodiment as disclosed herein. The hybrid system 1001 comprises a classical hardware architecture 1003 communicatively coupled to a quantum hardware architecture 1005. The classical hardware architecture 1003 comprises a user interface 1011, capable of receiving instructions from a user. The interface 1011 may include any known computing means for the user to input instructions and/or parameters pertaining at least to the FACES protocol. The instructions received may include the ideal control operations (the noisy implementations at 1015 of which the user would like to understand), the set of ideal/noiseless specific actions, as well as any further constraints the user may have, as discussed above. The classical processor 1007 is configured to communicate instructions input at the user interface 1011 to the classical/quantum interface 1009. The classical/quantum interface 1009 may comprise the FACES protocol instructions, that, when initiated by the user through the user interface 1011, causes the classical hardware architecture 1003 to communicate with the quantum hardware architecture 1005, by both sending and receiving information to and from the quantum hardware architecture 1005. This bi-directional communication may optionally be enacted through read/write (1013/1027 respectively) buses.

The instructions to enact all necessary procedures 1015 are then communicated to the quantum hardware architecture. Recall that procedures refer to physical manipulation of the input states through the quantum circuit, as well as the physical operations required to initially configure the quantum circuit. Therefore, the control operations of 1017 constitute the physical manipulation of components required to enact the quantum circuit in the real world, and are the control operations of interest, and hence form part of the procedures 1015. Note that the implementation of the control operations at 1017 is where there will be, by the nature of the technology, noise inherent in the system. In other embodiments, the control operations may appear separate to the procedures 1015 required for set up, or be shown as integral to the quantum processing unit 1025.

The quantum processing unit 1025 may comprise a number of quantum registers 1019, quantum gates 1021 and measurement apparatus 1023. The quantum registers 1019 contain the quantum information, which in one embodiment may comprise qubits, ready for manipulation by the quantum circuit to perform calculations. The collection of quantum gates 1021 are the building blocks of the quantum computation to be carried out, and may comprise time-dependent microwave (or more generally electromagnetic) pulses, lasers, activated magnetic fields, or similar such operations as is common in the industry for manipulating quantum information encoded in sub-atomic particles. By the nature of the FACES protocol as previously discussed, the protocol is indifferent as to what a user chooses to call a "gate", or "control operation". Therefore, the collection of quantum gates 1021 may serve as a library of all possible operations a quantum circuit may be permitted to perform, where it will be understood that certain quantum gates may be combined to create the control operations of interest 1017, or may themselves be the control operations.

The quantum processing unit 1025 may also comprise measurement apparatus 1023, configured to receive quantum information (that is, the output state of any given quantum circuit), and extract the underlying classical information. This can for instance occur, through applying dispersive readout, wherein for example the classical state of the output is indicated by the magnitude of a measurable reflected microwave pulse applied to the output quantum state. It will be clear to the skilled person that there are many other methods by which measurements may be obtained in order to retrieve the classical information and the disclosure herein is not limited by any particular measurement protocol.

For each quantum output state, there will be a corresponding classical result obtained through the measurement apparatus 1023, that is to be recorded and communicated to the classical computer 1003 via a write bus 1027, for post-processing. In one embodiment, this post-processing may take the form of steps S8-S12 of FIG. 9.

### Conclusion

In this disclosure, a method and system are presented for applying a noise characterisation procedure on quantum computations that elegantly solves the technical problems of adapting noise characterisation to the fermionic case, wherein the quantum computations involve families of continuously parameterised gates, and wherein the model is refined to characterise said noise at the level of individual control operations.

The method shows how to learn the (for example) matchgate-averaged noise parameters on many matchgates simultaneously via FACES, the fermionic adaptation of the ACES protocol. This will enable experiments to build a complete characterization of averaged noise parameters for universal gate sets. Whilst the technical challenge of performing matchgate twirling remains, Haar random unitaries can be approximated by low-depth circuits [25, 26], mitigating, if not entirely avoiding this issue. Therefore, to enable efficient matchgate twirling, a further aspect to the method may naturally consider only reproducing the Haar ensemble of FLO circuits up to the second moment, which is sufficient for exactly twirling the channel. It is known that this can be achieved using only gates in the intersection of the matchgate and Clifford groups [27, 28]. Finally, one may employ restricted circuit structure to address this challenge in a similar strategy to interleaved randomized benchmarking [29], which has historically enjoyed a great deal of success in practice.

In a setting where the circuit structure is limited to the FLO analogue of IRS, for example, we expect that FACES will exhibit a "repeated convolution structure" similar to that of matchgate benchmarking [18], since we are considering Haar averages over the group of FLO unitaries.

Another open question involves the notion of a gauge freedom in the learned parameters. Formally, such a freedom exists when the design matrix has a nontrivial kernel, whose elements correspond to unlearnable functions of gate eigenvalues. Recent works [11, 12] have shown that these functions correspond to the cut space of a particular graph in the Clifford setting. It is thus germane to ask whether a corresponding characterization is possible in the FLO setting.

It was also shown in [12] that, in the Clifford setting, one can construct design matrices that enable learning all learnable Pauli eigenvalues to relative precision. We expect similar results to hold in the setting of FACES, but we leave this open.

Ultimately, these protocols can be utilized to not only learn circuit-level noise, but to also mitigate them. With this in mind, an important feature of the method presented herein to help achieve its goals is that the design matrix is block diagonal. In the aforementioned question of gauge parameters, it is already clear that each unlearnable function thus depends only on gate eigenvalues from the same Majorana-degree sector. Additionally, noisy expectation values of fixed Majorana-degree observables are necessarily linear functions of the ideal expectation values, even in the setting where these observables are not Majorana monomials (e.g. measuring the expected energy for a Hamiltonian of fixed Majorana degree). This contrasts with the setting of Pauli observables under Clifford-circuit evolution, and is reminiscent of training methods for error mitigation [30, 31].

### Clauses

Finally, the present disclosure also contains the following clauses.

Clause 1. A method for characterizing noise processes in control operations run on a quantum computer, the method comprising:
receiving, as inputs:
   a set of *K* control operations *G =* {*G*₁, ..., *G_{K}*}, each control operation corresponding to a given quantum gate; and
   a set of specific actions each defining the overall effect of a quantum circuit in the absence of noise;
constructing from the set of control operations a set of at least K enlarged quantum circuits, wherein each enlarged quantum circuit is constructed by:
   arranging members of the set of control operations G to construct a set of quantum circuits, each of the quantum circuits in the set of quantum circuits being different from one another while being arranged to perform one of the specific actions from the set of specific actions; and
   enlarging each quantum circuit in the set of quantum circuits to form the set of enlarged quantum circuits, wherein enlarging each quantum circuit includes inserting additional operations into each quantum circuit in the set of quantum circuits;
for each enlarged quantum circuit in the set of enlarged quantum circuits:
   preparing, on the quantum computer, an input state;
   enacting, by the quantum computer, one or more procedures corresponding to the operations representing the enlarged quantum circuits to the prepared input state to provide an output state; and
   making a prescribed measurement on the output state;
for each action in the set of specific actions:
   constructing probability distributions from outcomes of the prescribed measurements on the output state for each enlarged quantum circuit;
   collecting aggregate parameters {*Λ*₀,*Λ*₁*,* ..., *Λ_{N}*} from each enlarged quantum circuit, wherein the aggregate parameters are associated with the control operations of each circuit in the set of quantum circuits;
   mapping the constructed probability distribution to the aggregate parameters;
   fitting the aggregate parameters to a gate noise model; and
   computing at least one noise parameter associated with every control operation based on at least one of:
      the gate noise model;
      the aggregate parameters; and/or
      the probability distribution.

Clause 2. The method of clause 1, wherein constructing the probability distributions comprises:
recording results of measurement outcomes in a basis determined by the prescribed measurement;
accumulating the results of the measurement outcomes and recording their frequencies; and
estimating the probability of observing specific measurement outcomes using the recorded results and frequencies.

Clause 3. The method of any preceding clause, wherein the prescribed measurement is associated with one of the specific actions from the set of specific actions.

Clause 4. The method of any preceding clause, wherein the input states comprise all-zero states |**0**〉 and/or all-plus states |+〉^{⊗*n*}.

Clause 5. The method of any preceding clause, wherein the prescribed measurement is in the computational basis:
for all-zeroes input states |**0**〉; and/or
for identity circuits.

Clause 6. The method of any of clauses 1 to 4, wherein the prescribed measurement is a Pauli-Y measurement on at least one qubit and a measurement in the computational basis for the remaining qubits:
for all-plus input states |+〉^{⊗*n*}; and/or
for *U*₊-unitary circuits.

Clause 7. The method of any preceding clause, wherein the additional operations comprise random and/or free-fermionic operations *V, V*^{†}.

Clause 8. The method of clause 7, wherein each random and/or free-fermionic operation *V, V*^{†} is Haar measurable.

Clause 9. The method of any preceding clause, wherein enlarging each quantum circuit further comprises including at least one additional operation before and/or at least one additional operation after at least one control operation in the quantum circuit.

Clause 10. The method of clause 9, wherein including at least one additional operation before and/or after at least one additional operation after each control operation in the quantum circuit is arranged to perform twirling of that control operation.

Clause 11. The method of clause 10, wherein twirling comprises associating each quantum circuit in the set of quantum circuits with a set of randomly sampled quantum circuits by replacing ${C}_{j , l} \to \left({U}_{j , l}{V}^{†}{U}_{j , l}^{†}\right) \left({C}_{j , l}\right) \left(V\right)$, for each control operation *C_{j,l}* in the quantum circuit *Cⱼ*, where *U_{j,l}* is the ideal gate corresponding to *C_{j,l}* and *V* is a Haar random ideal FLO unitary sampled independently for each *C_{j,l}*,

Clause 12. The method of any preceding clause, wherein enlarging each quantum circuit in the set of quantum circuits preserves the specific action associated with each quantum circuit.

Clause 13. The method of any preceding clause, wherein the set of specific actions comprises elements of the Clifford group.

Clause 14. The method of any preceding clause, wherein the set of specific actions comprises the identity operation.

Clause 15. The method of any preceding clause, wherein the set of specific actions comprises the unitary *U*₊.

Clause 16. The method of any preceding clause, wherein the mapping comprises a linear transformation.

Clause 17. The method of clause 16, wherein the linear transformation is a Kravchuk transformation.

Clause 18. The method of any preceding clause, wherein the fitting of the aggregate parameters to the gate noise model comprises relating the aggregate parameters to the noise parameters via a log-linear model.

Clause 19. The method of any preceding clause, wherein the fitting of aggregate parameters to a gate noise model further comprises recording the number of appearances of each gate in each quantum circuit in the set of quantum circuits.

Clause 20. The method of clause 19, wherein recording the number of appearances of each gate comprises computing at least one design matrix.

Clause 21. The method of clause 20, wherein the set of quantum circuits is complete in that the at least one design matrix is of:
full column rank; and/or
full row rank.

Clause 22. The method of any preceding clause, wherein computing at least one noise parameter comprises applying linear regression to the log-linear model.

Clause 23. The method of any preceding clause, wherein computing at least one noise parameter further comprises:
solving a linear system of the form ***Ax = b*** for ***x,*** wherein the aggregate parameters are related to *bⱼ via bⱼ* = - log(Λ*ⱼ*) and the noise parameters *ξⱼ* are related to *xⱼ* via *xⱼ* = - log(*ξ*^{(*j*)}); and
exponentiating each *xⱼ* to recover each noise parameter *ξⱼ*.

Clause 24. The method of any preceding clause, wherein the gate noise models are described by learnable parametrization.

Clause 25. The method of any preceding clause, wherein the gate noise models are Markovian.

Clause 26. The method of any preceding clause, wherein the gate noise models are time stationary.

Clause 27. The method of any preceding clause, wherein, each quantum circuit in the set of quantum circuits exceeds a diversity threshold dictated by a diversity criterion *δ*.

Clause 28. The method of any preceding clause, wherein the design matrix is truncated to only include elements which are above the diversity criterion *δ*.

Clause 29. The method of any preceding clause, wherein the control operations comprise manipulation of an input state by any of:
electromagnetic pulse sequences;
magnetic fields; and/or
lasers.

Clause 30. The method of any preceding clause, wherein the user may include additional constraints further specifying a particular model or dynamic they wish to run.

Clause 31. A hybrid quantum-classical computing apparatus comprising at least one classical processor and at least one quantum computer communicatively coupled with one another, the hybrid quantum-classical computing apparatus being configured to perform the steps of:
receiving, as inputs:
   a set of *K* control operations *G =* {*G*₁, ..., *G_{K}*}, each control operation corresponding to a given quantum gate; and
   a set of specific actions each defining the overall effect of a quantum circuit in the absence of noise;
constructing from the set of control operations a set of at least *K* enlarged quantum circuits, wherein each enlarged quantum circuit is constructed by:
   arranging members of the set of control operations *G* to construct a set of quantum circuits, each of the quantum circuits in the set of quantum circuits being different from one another while being arranged to perform one of the specific actions from the set of specific actions; and
   enlarging each quantum circuit in the set of quantum circuits to form the set of enlarged quantum circuits, wherein enlarging each quantum circuit includes inserting additional operations into each quantum circuit in the set of quantum circuits;
for each enlarged quantum circuit in the set of enlarged quantum circuits:
   preparing, on the quantum computer, an input state;
   enacting, by the quantum computer, one or more procedures corresponding to the operations representing the enlarged quantum circuits to the prepared input state to provide an output state; and
   making a prescribed measurement on the output state;
for each action in the set of specific actions:
   constructing probability distributions from outcomes of the prescribed measurements on the output state for each enlarged quantum circuit;
   collecting aggregate parameters {*Λ*₀,*Λ*₁*,* ...,*Λ_{N}*} from each enlarged quantum circuit, wherein the aggregate parameters are associated with the control operations of each circuit in the set of quantum circuits;
   mapping the constructed probability distribution to the aggregate parameters;
   fitting the aggregate parameters to a gate noise model; and
   computing at least one noise parameter associated with every control operation based on at least one of:
      the gate noise model;
      the aggregate parameters; and/or
      the probability distribution.

Clause 32. The apparatus of clause 31, wherein the quantum computer is further configured to process quantum information mediated by fermions.

Clause 33. The apparatus of clauses 31 or 32, wherein the quantum computer is further configured to process quantum operations, wherein free-fermionic operations constitute the fundamental gate set.

Clause 34. The apparatus of any one of clauses 31 to 33, wherein the quantum computer comprises a plurality of qubits.

Clause 35. The apparatus of any one of clauses 31 to 34, wherein the quantum computer comprises at least one qubit controller capable of manipulating the plurality of qubits.

Clause 36. The apparatus of any one of clauses 31 to 35, wherein the quantum computer comprises a superconducting device.

Clause 37. The apparatus of any one of clauses 31 to 36, further configured to perform the method steps of any of clauses 2 to 28.

Clause 38. One or more non-transitory computer-readable media storing instructions that, when executed by the at least one classical processor and/or at least one quantum computer, cause the at least one classical processor and/or at least one quantum computer to perform the method of clause 1.

## Claims

1. A method for characterizing noise processes in control operations run on a quantum computer, the method comprising:
receiving, as inputs:
a set of *K* control operations *G =* {*G*₁, ..., *G_{K}*}, each control operation corresponding to a given quantum gate; and
a set of specific actions each defining the overall effect of a quantum circuit in the absence of noise;
constructing from the set of control operations a set of at least *K* enlarged quantum circuits, wherein each enlarged quantum circuit is constructed by:
arranging members of the set of control operations *G* to construct a set of quantum circuits, each of the quantum circuits in the set of quantum circuits being different from one another while being arranged to perform one of the specific actions from the set of specific actions; and
enlarging each quantum circuit in the set of quantum circuits to form the set of enlarged quantum circuits, wherein enlarging each quantum circuit includes inserting additional operations into each quantum circuit in the set of quantum circuits;
for each enlarged quantum circuit in the set of enlarged quantum circuits:
preparing, on the quantum computer, an input state;
enacting, by the quantum computer, one or more procedures corresponding to the operations representing the enlarged quantum circuits to the prepared input state to provide an output state; and
making a prescribed measurement on the output state;
for each action in the set of specific actions:
constructing probability distributions from outcomes of the prescribed measurements on the output state for each enlarged quantum circuit;
collecting aggregate parameters {*Λ*₀,*Λ*₁*,* ...,*Λ_{N}*} from each enlarged quantum circuit, wherein the aggregate parameters are associated with the control operations of each circuit in the set of quantum circuits;
mapping the constructed probability distribution to the aggregate parameters;
fitting the aggregate parameters to a gate noise model; and
computing at least one noise parameter associated with every control operation based on at least one of:
the gate noise model;
the aggregate parameters; and/or
the probability distribution.

2. The method of claim 1, wherein constructing the probability distributions comprises:
recording results of measurement outcomes in a basis determined by the prescribed measurement;
accumulating the results of the measurement outcomes and recording their frequencies; and
estimating the probability of observing specific measurement outcomes using the recorded results and frequencies.

3. The method of any preceding claim, wherein the prescribed measurement is associated with one of the specific actions from the set of specific actions; and/or
wherein the prescribed measurement is in the computational basis:
for all-zeroes input states |**0**〉; and/or
for identity circuits, and/or
wherein the prescribed measurement is a Pauli-Y measurement on at least one qubit and a measurement in the computational basis for the remaining qubits:
for all-plus input states |+〉^{⊗*n*}; and/or
for *U*₊-unitary circuits.

4. The method of any preceding claim, wherein the input states comprise all-zero states |**0**〉 and/or all-plus states |+〉^{⊗*n*}.

5. The method of any preceding claim, wherein the additional operations comprise random and/or free-fermionic operations *V, V*^{†}; and/or
wherein each random and/or free-fermionic operation *V, V*^{†} is Haar measurable; and/or
wherein enlarging each quantum circuit further comprises including at least one additional operation before and/or at least one additional operation after at least one control operation in the quantum circuit; and/or
wherein including at least one additional operation before and/or after at least one additional operation after each control operation in the quantum circuit is arranged to perform twirling of that control operation; and/or
wherein twirling comprises associating each quantum circuit in the set of quantum circuits with a set of randomly sampled quantum circuits by replacing ${C}_{j , l} \to \left({U}_{j , l}{V}^{†}{U}_{j , l}^{†}\right) \left({C}_{j , l}\right) \left(V\right)$ *,* for each control operation *C_{j,l}* in the quantum circuit *Cⱼ*, where *U_{j,l}* is the ideal gate corresponding to *C_{j,l}* and *V* is a Haar random ideal FLO unitary sampled independently for each *C_{j,l}*,

6. The method of any preceding claim, wherein enlarging each quantum circuit in the set of quantum circuits preserves the specific action associated with each quantum circuit; and/or
wherein the set of specific actions comprises elements of the Clifford group; and/or
wherein the set of specific actions comprises the identity operation; and/or
wherein the set of specific actions comprises the unitary *U*₊.

7. The method of any preceding claim, wherein the mapping comprises a linear transformation; and/or
wherein the linear transformation is a Kravchuk transformation.

8. The method of any preceding claim, wherein the fitting of the aggregate parameters to the gate noise model comprises relating the aggregate parameters to the noise parameters via a log-linear model; and/or
wherein the fitting of aggregate parameters to the gate noise model further comprises recording the number of appearances of each gate in each quantum circuit in the set of quantum circuits; and/or
wherein recording the number of appearances of each gate comprises computing at least one design matrix.

9. The method of any preceding claim, wherein the set of quantum circuits is complete in that the at least one design matrix is of:
full column rank; and/or
full row rank.

10. The method of any preceding claim, wherein computing at least one noise parameter comprises applying linear regression to the log-linear model; and/or
wherein computing at least one noise parameter further comprises:
solving a linear system of the form ***Ax = b*** for ***x,*** wherein the aggregate parameters are related to *bⱼ* via *bⱼ =* -log(Λⱼ) and the noise parameters *ξⱼ* are related to *xⱼ* via *xⱼ =* - log(*ξ*^{(*j*)}); and
exponentiating each *xⱼ* to recover each noise parameter *ξⱼ*.

11. The method of any preceding claim, wherein the gate noise models are described by learnable parametrization; and/or
wherein the gate noise models are Markovian; and/or
wherein the gate noise models are time stationary.

12. The method of any preceding claim, wherein, each quantum circuit in the set of quantum circuits exceeds a diversity threshold dictated by a diversity criterion *δ*; and/or
wherein the design matrix is truncated to only include elements which are above the diversity criterion *δ*.

13. A hybrid quantum-classical computing apparatus comprising at least one classical processor and at least one quantum computer communicatively coupled with one another, the hybrid quantum-classical computing apparatus being configured to perform the steps of:
receiving, as inputs:
a set of *K* control operations *G =* {*G*₁, ..., *G_{K}*}, each control operation corresponding to a given quantum gate; and
a set of specific actions each defining the overall effect of a quantum circuit in the absence of noise;
constructing from the set of control operations a set of at least *K* enlarged quantum circuits, wherein each enlarged quantum circuit is constructed by:
arranging members of the set of control operations *G* to construct a set of quantum circuits, each of the quantum circuits in the set of quantum circuits being different from one another while being arranged to perform one of the specific actions from the set of specific actions; and
enlarging each quantum circuit in the set of quantum circuits to form the set of enlarged quantum circuits, wherein enlarging each quantum circuit includes inserting additional operations into each quantum circuit in the set of quantum circuits;
for each enlarged quantum circuit in the set of enlarged quantum circuits:
preparing, on the quantum computer, an input state;
enacting, by the quantum computer, one or more procedures corresponding to the operations representing the enlarged quantum circuits to the prepared input state to provide an output state; and
making a prescribed measurement on the output state;
for each action in the set of specific actions:
constructing probability distributions from outcomes of the prescribed measurements on the output state for each enlarged quantum circuit;
collecting aggregate parameters {*Λ*₀,*Λ*₁*, ...,Λ_{N}*} from each enlarged quantum circuit, wherein the aggregate parameters are associated with the control operations of each circuit in the set of quantum circuits;
mapping the constructed probability distribution to the aggregate parameters;
fitting the aggregate parameters to a gate noise model; and
computing at least one noise parameter associated with every control operation based on at least one of:
the gate noise model;
the aggregate parameters; and/or
the probability distribution.

14. The apparatus of claim 13, wherein the quantum computer is further configured to process quantum information mediated by fermions; and/or
wherein the quantum computer is further configured to process quantum operations, wherein free-fermionic operations constitute the fundamental gate set; and/or
wherein the quantum computer comprises a plurality of qubits; and/or
wherein the quantum computer comprises at least one qubit controller capable of manipulating the plurality of qubits.

15. The apparatus of claims 13 or 14, further configured to perform the method steps of any of claims 2 to 12.
